# EUROPEAN PATENT SPECIFICATION

(11) **EP 2 789 705 B1**
(45) Date of publication and mention of the grant of the patent: **10.10.2018**
(21) Application number: 12856064.6
(22) Date of filing: 04.12.2012
(51) Int. Cl.: C21D 9/40, C21D 1/06, C22C 38/00, C22C 38/18, C22C 38/44, F16C 19/36, F16C 33/32, F16C 33/34, F16C 33/58, F16C 33/62, F16C 33/64, F16C 33/66, F16C 19/38, F16C 19/54

(54) **MACHINE PART, ROLLING BEARING, CONICAL ROLLER BEARING AND METHOD FOR MANUFACTURING MACHINE PART**
MASCHINENTEIL, WÄLZLAGER, KEGELROLLENLAGER UND VERFAHREN ZUR HERSTELLUNG EINES MASCHINENTEILS
PIÈCE DE MACHINE, PALIER À ROULEMENT, ROULEMENT À ROULEAUX CONIQUES ET PROCÉDÉ DE FABRICATION D'UNE PIÈCE DE MACHINE

(30) Priority: 08.12.2011 JP 2011268922; 10.10.2012 JP 2012225137
(43) Date of publication of application: 15.10.2014
(73) Proprietor: NTN Corporation, Osaka-shi, Osaka 550-0003 (JP)
(72) Inventor: SATO, Daisuke, Mie 511-0867 (JP); OHKI, Chikara, Mie 511-0867 (JP); UENO, Takashi, Shizuoka 438-8510 (JP); KUSUMI, Yasutaka, Shizuoka 438-8510 (JP)
(74) Representative: Bockhorni & Brüntjen Partnerschaft Patentanwälte mbB
(86) International application number: PCT/JP2012/081337
(87) International publication number: WO 2013/084864

(56) References cited:
- EP-A1- 0 725 156
- EP-A1- 1 489 318
- EP-A2- 1 143 018
- DE-A1- 19 956 971
- JP-A- 2000 212 721
- JP-A- 2004 225 743
- JP-A- 2009 215 597
- JP-A- 2011 220 357

## Description

### TECHNICAL FIELD

The present invention relates to a machine part, a rolling bearing, a tapered roller bearing, and a method for manufacturing the machine part, and more particularly, to a machine part, a rolling bearing, a tapered roller bearing, and a method for manufacturing the machine part that can simultaneously achieve improvement in durability and improvement in dimensional stability.

### BACKGROUND ART

As measures to improve durability of a machine part made of steel, such as a rolling bearing, a carbonitriding process is known in which carbon and nitrogen are introduced into a surface layer portion of a part prior to a quenching treatment (e.g., see Japanese Patent Laying-Open No. 5-118336 (PTD 1). It is known that this carbonitriding process improves the rolling fatigue life of a rolling bearing, for example, and in particular, the life in an environment in which hard foreign substances intrude into the rolling bearing (a foreign-substance intruding environment).

### CITATION LIST

### PATENT DOCUMENT

PTD 1: Japanese Patent Laying-Open No. 5-118336

Furthermore, from EP 1 143 018 A2 an inner ring and an outer ring being composed as follows are known. These members are fabricated with a steel for bearing containing carbon 0.6 wt% or higher. A carbonitrided layer is formed in a raceway surface. The amount of residual austenite at a position of 2% Da depth in the raceway surface is determined to be 1.0 vol% or lower. Hardness at the position of 2% Da depth is set to be HRC58 or more. Nitrogen content (Np) at the position of 2% Da depth is 0.05 wt% or more.

EP 1 489 318 A1 shows a bearing ring. As the material constituting a bearing ring including an outer ring, use is made of an iron alloy containing 0.15 to 0.5 wt.% of C, 0.1 to 1.5 wt.% of Si, 0.1 to 1.5 wt.% of Mn and 0.5 to 3.0 wt.% of Cr. Not only is this material subjected to carbonitriding, quench hardening, tempering and polish finishing but also a surface layer containing 0.8 to 1.2 wt.% of C and 0.05 to 0.50 wt.% of N is provided at a surface portion of outer ring raceway disposed on an inside wall surface of the outer ring.

DE 199 56 971 A1 discloses a conical roller bearing used for vehicle drive shaft in aN oil-filled housing having outer and inner rings and rollers of steel with low oxygen content and a hard carbonitrided layer containing austenite.

### SUMMARY OF INVENTION

### TECHNICAL PROBLEM

However, considering recent demands for improved durability of machine parts, the conventional carbonitriding process may not ensure sufficient durability depending on the application. Specifically, in a transmission or a differential of a vehicle, for example, space allowed for a bearing is becoming smaller for increasing the number of stages of the transmission and enlarging driving space. Therefore, size reduction of a bearing that supports a transmission shaft in a transmission or a differential is being developed, and the need to support a load equivalent to that in conventional cases with a smaller bearing has arisen. When the bearing is made smaller, and in a tapered roller bearing on which a larger end face of a tapered roller is guided in contact with a larger flange surface of an inner ring, for example, contact pressure between the tapered roller and the larger flange surface becomes inevitably higher. As a result, a problem arises in that seizure occurs between the tapered roller and the larger flange surface.

Another problem may also arise in that the rate of secure dimensional changes increases with the employment of carbonitriding, resulting in reduced dimensional stability of a machine part.

The present invention was made to solve the above-described problems, and has an object to provide a machine part, a rolling bearing, a tapered roller bearing, and a method for manufacturing the machine part that can simultaneously achieve improvement in durability and improvement in dimensional stability.

### SOLUTION TO PROBLEM

A machine part according to one aspect of the present invention is constituted of steel containing at least 0.60 mass % and not more than 1.50 mass % of carbon, at least 0.15 mass % and not more than 2.50 mass % of silicon, at least 0.30 mass % and not more than 1.50 mass % of manganese, and at least 0.20 mass % and not more than 2.00 mass % of chromium with the rest consisting of an impurity. A nitrogen concentration in a surface layer portion under a contact surface to be in contact with another part is at least 0.3 mass %, wherein a surface layer portion indicates a region from a surface to a depth of 20 µm. An average quantity ot residual austenite as a whole is not more than 20 volume %.

A machine part according to another aspect of the present invention is constituted of steel containing at least 0.60 mass % and not more than 1.50 mass % of carbon, at least 0.15 mass % and not more than 2.50 mass % of silicon, at least 0.30 mass % and not more than 1.50 mass % of manganese, and at least 0.20 mass % and not more than 2.00 mass % of chromium, and further containing at least either one of not more than 0.5 mass % of nickel and not more than 0.2 mass % of molybdenum with the rest consisting of an impurity. A nitrogen concentration in a surface layer portion under a contact surface to be in contact with another part is at least 0.3 mass %. An average quantity of residual austenite as a whole is not more than 20 volume %.

The inventors of the present application have studied measures to simultaneously achieve improvement in durability and improvement in dimensional stability in a machine part used in contact with another part. As a result, they arrived at the following recognition and yielded the present invention.

In a machine part, damage such as cracks is likely to occur in a surface (contact surface) in contact with another part, such as a rolling contact surface of a rolling bearing and immediately below that surface. Therefore, by carbonitriding this contact surface, durability can be improved. At this time, according to the studies conducted by the inventors of the present application, the contact surface is improved in durability by setting the average nitrogen concentration in a region from a surface which is a contact surface to a depth of 20 µm (in the specification, claims and abstract of the present application, a "surface layer portion" indicates a region from a surface to a depth of 20 µm, and a "nitrogen concentration in the surface layer portion" indicates the average nitrogen concentration in the surface layer portion) to at least 0.3 mass %. On the other hand, when the nitrogen concentration in quench-hardened steel is increased, the quantity of residual austenite increases. With this being decomposed during use of the machine part, the rate of secular changes increases.

Here, in terms of durability of the contact surface, the nitrogen concentration in the surface layer portion, that is, a very thin layer having a depth within 20 µm from the surface is dominant. On the other hand, the rate of secular changes is affected by the quantity of residual austenite in the whole machine part. Therefore, a study on simultaneous achievement of improved durability and improved dimensional stability by reducing the quantity of residual austenite in the whole machine part while increasing the nitrogen concentration in the surface layer portion has revealed that improvement in durability and improvement in dimensional stability can be simultaneously achieved by setting the nitrogen concentration in the surface layer portion under the contact surface to at least 0.3 mass % and setting the whole average quantity of residual austenite to not more than 20 volume %. Such a combination of the nitrogen concentration in the surface layer portion and the whole quantity of residual austenite can be achieved by, for example, introducing nitrogen of higher concentration than in usual carbonitriding to the surface of a part, and then conducting a tempering treatment at a temperature higher than usual.

In the machine part of the present invention, the nitrogen concentration in the surface layer portion under the contact surface is set to at least 0.3 mass %, and the whole average quantity of residual austenite is set to not more than 20 volume %. As a result, according to the machine part of the present invention, the machine part that can simultaneously achieve improvement in durability and improvement in dimensional stability can be provided.

The reason why the component range of the steel constituting the machine part of the present invention has been limited to the aforementioned range is now described.

### Carbon: at least 0.60 mass % and not more than 1.50 mass %

The carbon content exerts a remarkable influence on the hardness of the contact surface of the machine part after the quench hardening. If the carbon content in the steel is less than 0.60 mass %, it becomes difficult to supply sufficient hardness to the contact surface after the quench hardening. Alternatively, the need to compensate for the carbon content in the surface by a carburizing treatment or the like arises, resulting in reduced production efficiency and increased manufacturing cost. If the carbon content exceeds 1.50 mass %, on the other hand, occurrence of cracking (quench cracking) at the time of the quench hardening is apprehended. Therefore, the carbon content has been set to at least 0.60 mass % and not more than 1.50 mass %.

### Silicon: at least 0.15 mass % and not more than 2.50 mass %

Silicon contributes to improvement in temper softening resistance of the steel. If the silicon content in the steel is less than 0.15 mass %, the temper softening resistance becomes insufficient, and there is a possibility that the hardness of the contact surface remarkably lowers due to tempering after the quench hardening or temperature rise during use of the machine part. If the silicon content exceeds 2.50 mass %, on the other hand, the hardness of the material before the quenching increases, and workability in cold working at the time of forming the material into the machine part lowers. Therefore, the silicon content has been set to at least 0.15 mass % and not more than 2.50 mass %.

### Manganese: at least 0.30 mass % and not more than 1.50 mass %

Manganese contributes to improvement in quenchability of the steel. If the manganese content is less than 0.30 mass %, this effect is not sufficiently attained. If the manganese content exceeds 1.50 mass %, on the other hand, the hardness of the material before the quenching increases, and the workability in the cold working lowers. Therefore, the manganese content has been set to at least 0.30 mass % and not more than 1.50 mass %.

### Chromium: at least 0.20 mass % and not more than 2.00 mass %

Chromium contributes to improvement in quenchability of the steel. If the chromium content is less than 0.20 mass %, this effect is not sufficiently attained. If the chromium content exceeds 2.00 mass %, on the other hand, there arises such a problem that the material cost rises. Therefore, the chromium content has been set to at least 0.20 mass % and not more than 2.00 mass %.

### Nickel: at least 0.5 mass %

Nickel also contributes to improvement in quenchability of the steel. While nickel is not an essential component in the steel constituting the machine part according to the present invention, the same can be added in a case where particularly high quenchability is required to the steel constituting the machine part such as a large machine part. If the nickel content exceeds 0.5 mass %, however, there is a possibility that the quantity of residual austenite after the quenching increases to cause reduction of dimensional stability. Therefore, nickel is preferably added to the steel constituting the machine part in the range of not more than 0.5 mass %.

### Molybdenum: not more than 0.2 mass %

Molybdenum also contributes to improvement in quenchability of the steel. If the molybdenum content exceeds 0.2 mass %, however, there arises such a problem that the material cost rises. Therefore, molybdenum is preferably added to the steel constituting the machine part in the range of not more than 0.2 mass %.

In the above-described machine part, in the above-described surface layer portion under the contact surface, five or more carbonitrides having a diameter of not more than 0.5 µm may present per 100 µm² in a section perpendicular to the contact surface.

Because the surface layer portion is strengthened by the presence of fine carbonitrides having a diameter of not more than 0.5 µm at a ratio of five or more per 100 µm² in the surface layer portion, the surface layer portion is improved more in durability, so that a machine part having excellent durability is obtained. Here, a carbonitride is an iron carbide or is obtained by substituting part of carbon in that carbide with nitrogen, and includes a Fe-C-based compound and a Fe-C-N-based compound. This carbonitride may also contain an alloying element contained in steel, such as chromium.

In the above-described machine part, the quantity of residual austenite in a region having a depth of 50 µm from the contact surface may be at least 20 volume %. Then, the durability of the contact surface, and in particular, the durability of the contact surface in a foreign-substance intruding environment can be improved.

The above-described machine part may be a part constituting a bearing. The machine part of the present invention having improved durability of the contact surface and excellent dimensional stability is suitable for a part constituting a bearing such as a rolling bearing.

The above-described machine part may be an inner ring of a rolling bearing and may have a nitrogen concentration of not more than 0.05 mass % in a radially inner surface. Dimensional changes due to decomposition of residual austenite often appear as expansion in part dimensions. On the other hand, an inner ring of a rolling bearing is often used with its radially inner surface fitted over the outer circumferential surface of a shaft or the like. Therefore, when the inner diameter expands, the fitted state of the inner ring over the shaft may become unstable. Addressing this, the nitrogen concentration in the radially inner surface can be reduced to not more than 0.05 mass % to restrain the above-described problems from arising.

A rolling bearing according to the present invention includes a raceway member and a plurality of rolling elements arranged in contact with the raceway member the present invention. At least either one of the raceway member and the rolling elements is the above-described machine part of the present invention. According to the rolling bearing of the present invention, by including the above-described machine part of the present invention as a component, a rolling bearing that can simultaneously achieve improvement in durability and improvement in dimensional stability can be provided.

A tapered roller bearing according to one aspect of the present invention includes an outer ring having a conical outer ring raceway surface, an inner ring having a conical inner ring raceway surface and being provided with a larger flange surface on a larger diameter side of the inner ring raceway surface and a smaller flange surface on a smaller diameter side, a plurality of tapered rollers arranged rollably between the outer ring raceway surface and the inner ring raceway surface, and a cage holding the tapered rollers at a predetermined spacing in a circumferential direction. During use of the bearing, a larger end face of each of the tapered rollers is guided in contact with the larger flange surface of the inner ring. R/R_{BASE} has a value ranging from 0.75 to 0.87 where R indicates a radius of curvature of the larger end face of each of the tapered rollers and R_{BASE} indicates a distance from a vertex of a conical surface including an outer circumferential surface of each of the tapered rollers to the larger flange surface of the inner ring. At least any one of the outer ring, the inner ring and the tapered rollers is the above-described machine part according to the one aspect of the present invention.

A tapered roller bearing according to another aspect of the present invention includes an outer ring having a conical outer ring raceway surface, an inner ring having a conical inner ring raceway surface and being provided with a larger flange surface on a larger diameter side of the inner ring raceway surface and a smaller flange surface on a smaller diameter side, a plurality of tapered rollers arranged rollably between the outer ring raceway surface and the inner ring raceway surface, and a cage holding the tapered rollers at a predetermined spacing in a circumferential direction. During use of the bearing, a larger end face of each of the tapered rollers is guided in contact with the larger flange surface of the inner ring. R/R_{BASE} has a value ranging from 0.75 to 0.87 where R indicates a radius of curvature of the larger end face of each of the tapered rollers and R_{BASE} indicates a distance from a vertex of a conical surface including an outer circumferential surface of each of the tapered rollers to the larger flange surface of the inner ring. At least any one of the outer ring, the inner ring and the tapered rollers is the above-described machine part according to the other aspect of the present invention.

The inventors of the present application have studied measures to achieve improvement in dimensional stability while securing high durability in a tapered roller bearing. As a result, they have arrived at the following recognition and yielded the present invention.

In the above-described tapered roller bearing including the inner ring, the outer ring and the tapered roller, when calculating the thickness of an oil film formed between the larger flange surface of the inner ring and the larger end face of the tapered roller utilizing the Kama's formula, the thickness of the oil film is at maximum when R/R_{BASE} is 0.76. When R/R_{BASE} exceeds 0.9, the thickness of the oil film rapidly decreases.

On the other hand, when calculating a maximum Hertzian stress between the larger flange surface of the inner ring and the larger end face of the tapered roller, the maximum Hertzian stress monotonously decreases with increase of R/R_{BASE}.

Here, to suppress heat generation due to sliding friction between the larger flange surface of the inner ring and the larger end face of the tapered roller to restrain seizure of the inner ring and the tapered roller, it is desirable to increase the thickness of the oil film and decrease the maximum Hertzian stress. Further, according to the studies conducted by the inventors of the present application, seizure can effectively be restrained from occurring by adjusting the value of R/R_{BASE} at 0.75 to 0.87. It is noted that the value of R/R_{BASE} of a general tapered roller bearing is approximately 0.90 to 0.97.

In bearing parts such as the outer ring, the inner ring and the rolling element, in a surface in contact with another part (contact surface) and immediately under that surface, damage such as cracks or seizure is likely to occur. Addressing this, this contact surface can be carbonitrided to improve durability. At this time, according to the studies conducted by the inventors of the present application, the contact surface is improved in durability by setting the average nitrogen concentration in a region from a surface which is the contact surface to a depth of 20 µm (in the specification, claims and abstract of the present application, a "surface layer portion" indicates a region from the surface to a depth of 20 µm, and a "nitrogen concentration in the surface layer portion" indicates the average nitrogen concentration in the surface layer portion) to at least 0.3 mass %. Particularly by increasing the nitrogen concentration in the surface layer portion, the quantity of residual austenite in the vicinity of the rolling contact surface increases, so that durability to withstand rolling fatigue in a foreign-substance intruding environment is improved. Further, by increasing the nitrogen concentration in the surface layer portion, temper softening resistance in that surface layer portion is improved. Therefore, even when the temperature of the contact portion is raised by, for example, the sliding contact between the inner ring and the tapered roller (e.g., the sliding contact between the larger end face and the larger flange surface), hardness of that contact portion is restrained from decreasing, and seizure is restrained from occurring.

On the other hand, the nitrogen concentration in the quench-hardened steel is increased, the quantity of residual austenite increases. With this being decomposed during use of the bearing part, the rate of secular changes increases.

Here, in terms of durability of the contact surface, the nitrogen concentration in the surface layer portion, that is, a very thin layer having a depth within 20 µm from the surface is dominant. On the other hand, the rate of secular changes is affected by the quantity of residual austenite in the whole machine part. Therefore, a study on simultaneous achievement of improved durability and improved dimensional stability by reducing the quantity of residual austenite in the whole machine part while increasing the nitrogen concentration in the surface layer portion has revealed that improvement in durability and improvement in dimensional stability can be simultaneously achieved by setting the nitrogen concentration in the surface layer portion under the contact surface to at least 0.3 mass % and setting the whole average quantity of residual austenite to not more than 20 volume %. Such a combination of the nitrogen concentration in the surface layer portion and the whole quantity of residual austenite can be achieved by, for example, introducing nitrogen of higher concentration than in usual carbonitriding to the surface of a part, and then conducting a tempering treatment at a temperature higher than usual.

In the tapered roller bearing of the present invention, seizure between the larger end face of the tapered roller and the larger flange surface of the inner ring is restrained by adjusting the value of R/R_{BASE} to range from 0.75 to 0.87. Further, because at least any one of the outer ring, the inner ring and the tapered roller is a high-strength bearing part (the machine part according to the present invention described above) in which the nitrogen concentration in the surface layer portion under the contact surface is set to at least 0.3 mass % and the whole average quantity of residual austenite is set to not more than 20 volume %, dimensional stability can be improved while achieving improvement in durability to withstand rolling fatigue in a severe environment including a foreign-substance intruding environment and further restraint of seizure by improvement in temper softening resistance. As a result, according to the tapered roller bearing of the present invention, a tapered roller bearing that can achieve improvement in dimensional stability while securing high durability can be provided.

In the above-described tapered roller bearing, the smaller flange surface of the above-described inner ring may be formed by a surface in parallel to the smaller end face of the tapered roller.

Accordingly, even if there are fluctuations in the dimensions of a chamfer on the smaller end face and in the shape of the smaller end face, smaller end face 49 and smaller flange surface 44 lying in parallel to each other come into surface contact in the initial assembled state. Therefore, the gap between the larger end face and the larger flange surface at this time is not affected by fluctuations in the dimensions of the chamfer on the smaller end face and in the shape of the smaller end face, and the time until each tapered roller settles into a regular position after the start of operation less fluctuates. As a result, the running-in time of the tapered roller bearing can be shortened.

In the above-described tapered roller bearing, the larger flange surface of the above-described inner ring may have a surface roughness Ra ranging from 0.05 to 0.20 µm.

By setting above-described surface roughness Ra to at least 0.05 µm, at the running-in performed at low speeds, the lubrication condition between the larger flange surface of the inner ring and the larger end face of the tapered roller can be boundary lubrication, rather than mixed lubrication between fluid lubrication and boundary lubrication. Therefore, the coefficient of friction is stabilized, and preload force can be managed accurately. It is noted that since a sufficient oil film is formed between the larger flange surface and the larger end face under the general bearing use condition in which the rotating speed exceeds 100 rpm, the lubrication condition is brought into fluid lubrication, so that the coefficient of friction becomes sufficiently small. On the other hand, even when the temperature of the bearing increases at high-speed rotation and the viscosity of the lubricant decreases by setting surface roughness Ra to not more than 0.20 µm, the thickness of the oil film can be secured sufficiently, and seizure can be restrained from occurring more reliably.

In the above-described tapered roller bearing, the gap between the smaller flange surface of the inner ring and the smaller end face of the tapered roller, left when the larger end face of the above-described tapered roller comes into contact with the larger flange surface of the inner ring, may be controlled to be not more than 0.4 mm. Accordingly, the number of rotations until the tapered roller settles into the regular position at the running-in can be reduced to shorten the running-in time.

In the above-described tapered roller bearing, the smaller flange surface of the above-described inner ring may be a ground surface or a turned surface. Accordingly, the gap between the smaller flange surface of the inner ring and the smaller end face of the tapered roller can be managed accurately.

In the above-described tapered roller bearing, the larger flange surface of the inner ring may include a base surface to be in contact with the larger end face of each of the tapered rollers, and a flank smoothly connecting with an outer side of the base surface and being curved in a direction spaced away from the larger end face of each of the tapered rollers.

Accordingly, a gap is left in proximity to the outer edge of a contact region between the larger flange surface of the inner ring and the larger end face of the tapered roller. As a result, the function of drawing the lubricant toward the contact region is enhanced, so that a sufficient oil film is formed. Moreover, formation of this smooth flank can restrain a scratch that would be caused by contact between the tapered roller and the larger flange surface of the inner ring when skew of the tapered roller occurs.

In the above-described tapered roller bearing, the flank may have a sectional shape including an arcuate region. Accordingly, a flank having an excellent function of drawing the lubricant can easily be formed.

In the above-described tapered roller bearing, a recess having a circular planar shape may be provided at a central portion of the larger end face of each of the tapered rollers, and an outer circumferential end of the recess may be positioned in a boundary region between the base surface and the flank of the inner ring.

Accordingly, the lubricant can be guided to the vicinity of the above-described gap left in proximity to the outer edge of the contact region between the larger flange surface of the inner ring and the larger end face of the tapered roller to supply the lubricant sufficiently to that gap. Moreover, an allowable skew angle of the tapered roller can be increased further.

In the above-described tapered roller bearing, the boundary between the base surface and the flank may be positioned at an outer edge of a maximum contact ellipse produced by contact between the larger end face of each of the tapered rollers and the larger flange surface under an allowable maximum axial load of the bearing.

Accordingly, the above-described gap to which the lubricant is drawn can be left appropriately over the entire used load range of the tapered roller bearing.

In the above-described tapered roller bearing, in the surface layer portion under the contact surface, five or more carbonitrides having a diameter of not more than 0.5 µm may be present per 100 µm² in a section perpendicular to the contact surface.

Because the surface layer portion is strengthened by the presence of fine carbonitrides having a diameter of not more than 0.5 µm at a ratio of five or more per 100 µm² in the surface layer portion, the surface layer portion is improved more in durability, so that a machine part having excellent durability is obtained. Here, a carbonitride is an iron carbide or is obtained by substituting part of carbon in that carbide with nitrogen, and includes a Fe-C-based compound and a Fe-C-N-based compound. This carbonitride may also contain an alloying element contained in steel, such as chromium.

In the above-described tapered roller bearing, the quantity of residual austenite in a region having a depth of 50 µm from the contact surface may be at least 20 volume %. Then, the durability of the contact surface, and in particular, the durability of the contact surface in a foreign-substance intruding environment can be improved.

In the above-described tapered roller bearing, the inner ring may be the above-described high-strength bearing part, and the nitrogen concentration in the radially inner surface of the inner ring may be not more than 0.05 mass %.

Dimensional changes due to decomposition of residual austenite often appear as expansion in part dimensions. On the other hand, an inner ring of a rolling bearing is often used with its radially inner surface fitted over the outer circumferential surface of a shaft or the like. Therefore, when the inner diameter expands, the fitted state of the inner ring over the shaft may become unstable. Addressing this, the nitrogen concentration in the radially inner surface can be reduced to not more than 0.05 mass % to restrain the above-described problems from arising.

The above-described tapered roller bearing may be used for supporting a transmission shaft of a vehicle. The above-described vehicle may be a two-wheel vehicle. In a gear shaft support device for a vehicle in which a gear shaft is rotatably supported by a bearing in a housing filled with a gear oil, the above-described tapered roller bearing may be used as that bearing. The tapered roller bearing of the present invention is suitable for the above-described application in which size reduction is required while securing sufficient durability.

A method for manufacturing a machine part according to one aspect of the present invention includes the steps of producing a formed member by forming steel containing at least 0.60 mass % and not more than 1.50 mass % of carbon, at least 0.15 mass % and not more than 2.50 mass % of silicon, at least 0.30 mass % and not more than 1.50 mass % of manganese, and at least 0.20 mass % and not more than 2.00 mass % of chromium with the rest consisting of an impurity, carbonitriding the formed member, quench hardening the formed member having been carbonitrided, tempering the formed member having been quench hardened, and machining the formed member having been tempered, thereby forming a contact surface being a surface to be in contact with another part. In the step of carbonitriding the formed member, the formed member is carbonitrided such that a nitrogen concentration in a surface layer portion under the contact surface is at least 0.3 mass % in the step of forming the contact surface wherein a surface layer portion indicates a region from a surface to a depth of 20 µm. In the step of tempering the formed member, the formed member is tempered such that an average quantity of residual austenite of the formed member as a whole is not more than 20 volume %. The steps of carbonitriding the formed member, quench hardening the formed member, tempering the formed member, and forming the contact surface are carried out such that, in the surface layer portion under the contact surface, five or more carbonitrides having a diameter of not more than 0.5 µm are present per 100 µm² in a section perpendicular to the contact surface.

A method for manufacturing a machine part according to another aspect of the present invention includes the steps of producing a formed member by forming steel containing at least 0.60 mass % and not more than 1.50 mass % of carbon, at least 0.15 mass % and not more than 2.50 mass % of silicon, at least 0.30 mass % and not more than 1.50 mass % of manganese, and at least 0.20 mass % and not more than 2.00 mass % of chromium, and further containing at least either one of not more than 0.5 mass % of nickel and not more than 0.2 mass % of molybdenum with the rest consisting of an impurity, carbonitriding the formed member, quench hardening the formed member having been carbonitrided, tempering the formed member having been quench hardened, and machining the formed member having been tempered, thereby forming a contact surface being a surface to be in contact with another part. In the step of carbonitriding the formed member, the formed member is carbonitrided such that a nitrogen concentration in a surface layer portion under the contact surface is at least 0.3 mass % in the step of forming the contact surface. In the step of tempering the formed member, the formed member is tempered such that an average quantity of residual austenite of the formed member as a whole is not more than 20 volume %. The steps of carbonitriding the formed member, quench hardening the formed member, tempering the formed member, and forming the contact surface are carried out such that, in the surface layer portion under the contact surface, five or more carbonitrides having a diameter of not more than 0.5 µm are present per 100 µm² in a section perpendicular to the contact surface.

According to the methods for manufacturing a machine part of the one and the other aspects of the present invention, the machine parts of the one and the other aspects, in each of which, in the surface layer portion under the contact surface, five or more carbonitrides having a diameter of not more than 0.5 µm are present per 100 µm² in a section perpendicular to the contact surface, can be manufactured.

In the above-described methods for manufacturing a machine part, in the step of quench hardening the formed member, the formed member may be quench hardened by cooling a region to be the surface layer portion under the contact surface at a cooling rate of at least 20°C/sec on average in a temperature range from a quenching temperature to 600°C and at least 30°C/sec on average in a temperature range from the quenching temperature to 400°C. Accordingly, a region to be a surface layer portion decreased in quenchability by carbonitriding is quench hardened reliably.

### ADVANTAGEOUS EFFECTS OF INVENTION

As is clear from the above description, according to the machine part, rolling bearing, tapered roller bearing, and method for manufacturing the machine part of the present invention, a machine part, a rolling bearing, a tapered roller bearing, and a method for manufacturing the machine part that can simultaneously achieve improvement in durability and improvement in dimensional stability can be provided.

### BRIEF DESCRIPTION OF DRAWINGS

Fig. 1 is a schematic sectional view showing a structure of a deep groove ball bearing.
Fig. 2 is a schematic partial sectional view showing a principal part in Fig. 1 in an enlarged manner.
Fig. 3 is a schematic sectional view showing a structure of a thrust roller bearing.
Fig. 4 is a schematic partial sectional view of a raceway ring in Fig. 3.
Fig. 5 is a schematic sectional view of a roller in Fig. 3.
Fig. 6 is a flow chart schematically showing a method for manufacturing a rolling bearing.
Fig. 7 is a schematic sectional view showing a structure of a differential.
Fig. 8 is a schematic sectional view showing a structure of a tapered roller bearing.
Fig. 9 is a schematic sectional view showing a principal part in Fig. 8 in an enlarged manner.
Fig. 10 is a schematic sectional view for describing design specifications of the tapered roller bearing in Fig. 8.
Fig. 11 is a diagram for describing the relation between the radius of curvature of a larger end face of a tapered roller and the thickness of an oil film.
Fig. 12 is a diagram for describing the relation between the radius of curvature of a larger end face of a tapered roller and the maximum Hertzian stress.
Fig. 13 is a schematic sectional view for describing a structure of bearing parts constituting the tapered roller bearing.
Fig. 14 is a schematic sectional view showing a variation of a structure of a tapered roller bearing.
Fig. 15 is a flow chart schematically showing a method for manufacturing a tapered roller bearing.
Fig. 16 is a diagram showing the distribution of nitrogen concentration in proximity to a surface.
Fig. 17 is a diagram showing the distribution of nitrogen concentration in proximity to a surface.
Fig. 18 is a diagram showing the distribution of nitrogen concentration in proximity to a surface.
Fig. 19 is a diagram showing the distribution of nitrogen concentration in proximity to a surface.
Fig. 20 is a diagram showing a shape in proximity to a detached portion after the occurrence of detachment.
Fig. 21 is a diagram showing an exemplary shape of an impression.
Fig. 22 is a diagram showing the result of rolling fatigue life test.
Fig. 23 is a diagram showing the relation between the nitrogen concentration in the surface layer portion and the rolling fatigue life.
Fig. 24 is a diagram showing the distribution of quantity of residual austenite in proximity to the surface.
Fig. 25 is a diagram showing the relation between the quantity of residual austenite and the rate of secure dimensional changes.
Fig. 26 is a diagram showing the distribution of carbon and nitrogen concentrations in proximity to the surface.
Fig. 27 is a diagram showing the distributions of carbon and nitrogen concentrations in proximity to the surface.
Fig. 28 is a SEM photograph of the surface of a test piece.
Fig. 29 is a SEM photograph of the surface of a test piece.
Fig. 30 is a SEM photograph of the surface of a test piece.
Fig. 31 is a SEM photograph of the surface of a test piece.
Fig. 32 is a diagram showing the relation between the ambient temperature and the hardness.

### DESCRIPTION OF EMBODIMENTS

Embodiments of the present invention are now described with reference to the drawings. In the following drawings, the same reference numerals are assigned to identical or corresponding portions, and redundant description is not repeated.

### (First Embodiment)

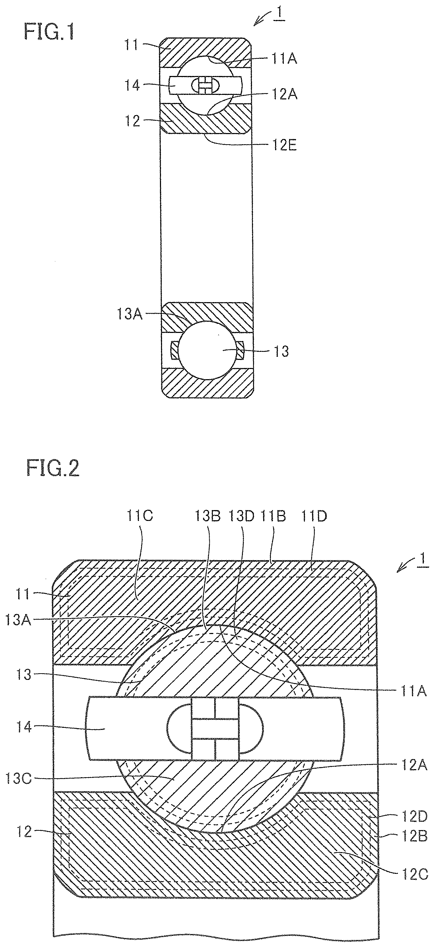

First, referring to Figs. 1 and 2, a first embodiment as one embodiment of the present invention will be described citing, as an example, a rolling bearing as a mechanical element including a bearing part which is a machine part. A deep groove ball bearing 1 includes an outer ring 11 serving as a first raceway member as a bearing part, an inner ring 12 serving as a second raceway member as a bearing part, balls 13 as a plurality of rolling elements serving as bearing parts, and a cage 14. At outer ring 11, an outer ring rolling contact surface 11A serving as an annular first rolling contact surface is formed. At inner ring 12, an inner ring rolling contact surface 12A serving as an annular second rolling contact surface opposed to outer ring rolling contact surface 11A is formed. At each of plurality of balls 1 3, a ball rolling surface 13A (the surface of ball 13) serving as a rolling element rolling contact surface is formed. Outer ring rolling contact surface 11A, inner ring rolling contact surface 12A and ball rolling surface 13A are contact surfaces of these bearing parts. Balls 13 are each in contact with each of outer ring rolling contact surface 11A and inner ring rolling contact surface 12A at ball rolling surface 13A and are held to be arranged by annular cage 14 at a predetermined pitch in the circumferential direction to be capable of rolling on an annular raceway. With the above-described structure, outer ring 11 and inner ring 12 of deep groove ball bearing 1 can rotate relative to each other.

Referring to Fig. 2, outer ring 11, inner ring 12 and ball 13 serving as bearing parts are made of a quench-hardened steel containing at least 0.60 mass % and not more than 1.50 mass % of carbon, at least 0.15 mass % and not more than 2.50 mass % of silicon, at least 0.30 mass % and not more than 1.50 mass % of manganese, and at least 0.20 mass % and not more than 2.00 mass % of chromium with the rest consisting of an impurity, for example, SUJ2 as a JIS high-carbon chromium bearing steel. In regions including outer ring rolling contact surface 11A, inner ring rolling contact surface 12A and ball rolling surface 13A serving as contact surfaces, nitrogen enriched layers 11D, 12D and 13D having higher nitrogen concentration than in inner portions 11C, 12C and 13C are respectively formed. The average nitrogen concentration in surface layer portions 11B, 12B and 13B having a distance of not more than 20 µm from outer ring rolling contact surface 11A, inner ring rolling contact surface 12A and ball rolling surface 13A serving as contact surfaces, which are the surfaces of nitrogen enriched layers 11D, 12D and 13D, is at least 0.3 mass %. Furthermore, the quantity of residual austenite in each of whole outer ring 11, whole inner ring 12 and whole ball 13 is not more than 20 volume %.

Outer ring 11, inner ring 12 and ball 13, each serving as the bearing part according to the present embodiment, have a nitrogen concentration of at least 0.3 mass % in surface layer portions 11B, 12B and 13B under the contact surfaces, and the average quantity of residual austenite in each of whole outer ring 11, whole inner ring 12 and whole ball 13 is not more than 20 volume %. As a result, outer ring 11, inner ring 12 and ball 13 are machine parts that can simultaneously achieve improvement in durability and improvement in dimensional stability.

It is noted that the steel constituting outer ring 11, inner ring 12 and ball 13 may further contain at least either one of not more than 0.5 mass % of nickel and not more than 0.2 mass % of molybdenum. Accordingly, the steel is improved in quenchability, and bearing parts of a large-sized rolling bearing can be obtained.

In outer ring 11, inner ring 12 and ball 13, in surface layer portions 11B, 12B and 13B under the contact surfaces (outer ring rolling contact surface 11A, inner ring rolling contact surface 12A and ball rolling surface 13A), five or more carbonitrides having a diameter of not more than 0.5 µm are preferably present per 100 µm² in a section perpendicular to the contact surface. By the presence of a large number of such fine carbonitrides in surface layer portions 11B, 12B and 13B, surface layer portions 11B, 12B and 13B are improved more in durability, so that outer ring 11, inner ring 12 and ball 13 having excellent durability are obtained. More preferably, ten or more of the above-described carbides are present in the above-described regions. It is noted that the presence (numbers) of the above-described carbides can be checked by, for example, observing the above-described regions with a scanning electron microscope (SEM) and subjecting the observation result to image analysis processing.

Still more preferably, in outer ring 11, inner ring 12 and ball 13, the quantity of residual austenite in regions having a depth of 50 µm from the contact surfaces (outer ring rolling contact surface 11A, inner ring rolling contact surface 12A and ball rolling surface 13A) is at least 20 volume %. Accordingly, durability of outer ring rolling contact surface 11A, inner ring rolling contact surface 12A and ball rolling surface 13A serving as contact surfaces, and in particular, durability of the contact surfaces in a foreign-substance intruding environment can be improved.

Furthermore, referring to Fig. 1, the nitrogen concentration in a radially inner surface 12E of above-described inner ring 12 can be not more than 0.05 mass %. Accordingly, the fitted state of inner ring 12 over a member such as a shaft is stabilized.

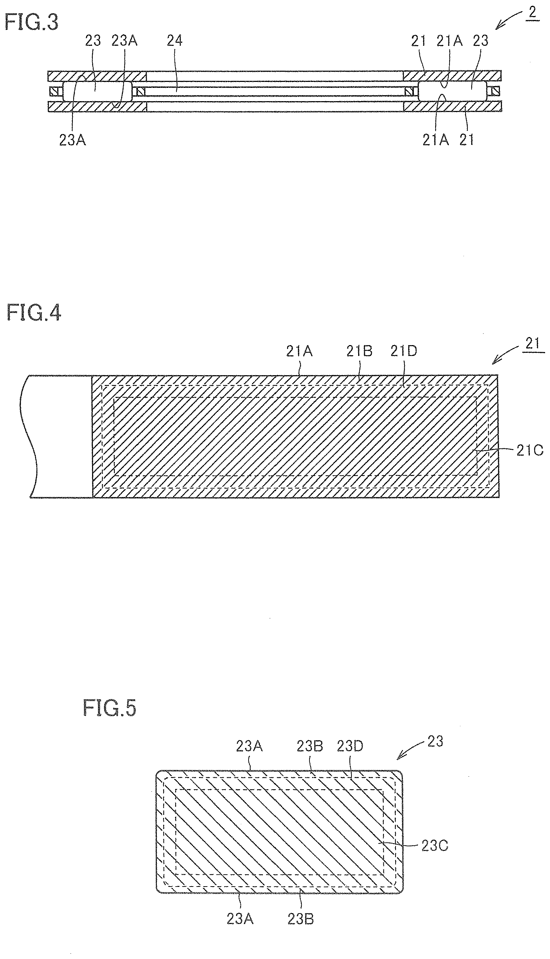

Next, referring to Figs. 3 to 5, a rolling bearing including bearing parts (machine parts) according to another embodiment will be described. A thrust needle roller bearing 2 has a structure and effects basically similar to those of above-described deep groove ball bearing 1. However, thrust needle roller bearing 2 differs from deep groove ball bearing 1 in terms of the structure of raceway members and rolling elements. That is, thrust needle roller bearing 2 includes a pair of raceway rings 21 as raceway members having a disk-like shape and being arranged such that their one major surfaces are opposed to each other, a plurality of needle rollers 23 as rolling elements and an annular cage 24. Plurality of needle rollers 23 are each in contact with raceway ring rolling contact surfaces 21A formed on the one major surfaces of pair of raceway rings 21 opposed to each other on a roller rolling contact surface 23A which is an outer circumferential surface of needle roller 23 and arranged by annular cage 24 at a predetermined pitch in the circumferential direction to be capable of rolling on the annular raceway. With the above-described structure, pair of raceway rings 21 of thrust needle roller bearing 2 can rotate relative to each other.

Raceway rings 21 of thrust needle roller bearing 2 correspond to outer ring 11 and inner ring 12 of the deep groove ball bearing and needle rollers 23 of thrust needle roller bearing 2 correspond to balls 13 of the deep groove ball bearing. They are made of a similar raw material, and have nitrogen enriched layers 21D, 23D, inner portions 21C, 23C, surface layer portions 21B, 23B, raceway ring rolling contact surface 21A, and rolling contact surface 23A having a similar nitrogen concentration and a similar quantity of residual austenite. Accordingly, raceway rings 21 and needle rollers 23 are machine parts that can simultaneously achieve improvement in durability and improvement in dimensional stability.

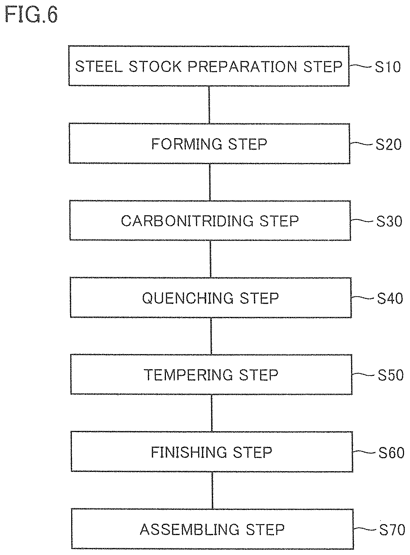

Next, a method for manufacturing the bearing parts and the rolling bearing according to the above-described embodiment will be described. Referring to Fig. 6, first, a steel stock preparation step is carried out as a step (S10). In this step (S10), a steel stock made of steel containing at least 0.60 mass % and not more than 1.50 mass % of carbon, at least 0.15 mass % and not more than 2.50 mass % of silicon, at least 0.30 mass % and not more than 1.50 mass % of manganese, and at least 0.20 mass % and not more than 2.00 mass % of chromium with the rest consisting of an impurity, for example, high-carbon chromium bearing steel, such as JIS SUJ2, SUJ3, SUJ4, and SUJ5. Specifically, for example, bar steel, steel wire or the like having the above-described component composition is prepared.

Next, a forming step is carried out as a step (S20). In this step (S20), machining, such as forging or turning, is carried out on the bar steel, steel wire or the like prepared in step (S10), for example, so that formed members formed into shapes of outer ring 11, inner ring 12, balls 13, raceway rings 21, needle rollers 23, and the like shown in Figs. 1 to 5 can be produced.

Next, a carbonitriding step is carried out as a step (S30). In this step (S30), the formed member produced in step (S20) is carbonitrided. This carbonitriding can be carried out as will be described below, for example. First, the above-described formed member is preheated for a time at least 30 minutes and not more than 90 minutes in the temperature range of at least 780°C and not more than 820°C. Next, the preheated formed member is heated in an atmosphere in which an ammonia gas is further introduced into an endoergic gas, such as a RX gas, adjusted in carbon potential by the addition of a propane gas or a butane gas as an enriched gas to be carbonitrided. The temperature of carbonitriding can be set to at least 820°C and not more than 880°C, for example. The time of carbonitriding can be set in accordance with the nitrogen concentration of a nitrogen enriched layer to be formed in the formed member, and can be set to, for example, at least four hours and not more than twelve hours, preferably to at least four hours and not more than seven hours. Accordingly, the nitrogen enriched layer can be formed while restraining decarburization of the formed member.

Next, a quenching step is carried out as a step (S40). In this step (S40), the formed member with the nitrogen enriched layer formed therein by carbonitriding in step (S30) is rapidly cooled down from a predetermined quenching temperature to be quenched. This quenching temperature can be set to, for example, at least 820°C and not more than 880°C, and preferably to at least 850°C and not more than 880°C. The quenching treatment can be carried out by, for example, dipping the formed member in a quenching oil as a coolant kept at a predetermined temperature. In this step (S40), a region in the formed member to be a surface layer portion under a contact surface is preferably cooled at a cooling rate of at least 20°C/sec on average in a temperature range from the quenching temperature to 600°C and at least 30°C/sec on average in a temperature range from the quenching temperature to 400°C. Accordingly, regions decreased in quenchability by carbonitriding in step (S30), to be surface layer portions, can be quench hardened reliably.

Next, a tempering step is carried out as a step (S50). In this step (S50), the formed member subjected to the quenching treatment in step (S40) is subjected to a tempering treatment. Specifically, the tempering treatment is carried out by holding the formed member for a time period of at least half an hour and not more than three hours in an atmosphere heated to a temperature range of at least 180°C and not more than 240°C, for example. Furthermore, the tempering temperature may be at least 180°C and not more than 210°C.

Next, a finishing step is carried out as a step (S60). In this step (S60), by machining the formed member subjected to the tempering treatment in step (S50), a contact surface to be in contact with another part, namely, outer ring rolling contact surface 11A, inner ring rolling contact surface 12A and ball rolling surface 13A of deep groove ball bearing 1, as well as raceway ring rolling contact surface 21A and rolling contact surface 23A of thrust needle roller bearing 2 are formed. As the finishing, grinding can be carried out, for example. Through the above steps, outer ring 11, inner ring 12, balls 13, raceway rings 21, needle rollers 23, and the like, each serving as the bearing part according to the present embodiment, are completed.

Furthermore, an assembling step is carried out as a step (S70). In this step (S70), outer ring 11, inner ring 12, balls 13, raceway rings 21, and needle rollers 23 produced through steps (S10) to (S60) are combined with separately prepared cages 14, 24 and the like to assemble deep groove ball bearing 1 or thrust needle roller bearing 2 according to the above-described embodiment. Accordingly, the method for manufacturing the rolling bearing according to the above-described embodiment is completed.

Here, in the above-described step (S30), the formed member is carbonitrided such that the nitrogen concentration in surface layer portions 11B, 12B, 13B, 21B, and 23B under the contact surfaces becomes at least 0.3 mass % by the finishing in subsequent step (S60). That is, in consideration of a machining allowance in step (S60) and the like, nitrogen enriched layers 11D, 12D, 13D, 21D, and 23D having a nitrogen amount adjusted such that the nitrogen concentration in the surface layer portions after the completion of the contact surfaces can be at least 0.3 mass % are formed.

Furthermore, in above-described step (S50), the formed member is subjected to the tempering treatment such that the average quantity of residual austenite in the whole formed member is not more than 20 volume %.

In a finished product, to set the quantity of residual austenite in regions having a depth of 50 µm from outer ring rolling contact surface 11A, inner ring rolling contact surface 12A and ball rolling surface 13A of deep groove ball bearing 1 as well as raceway ring rolling contact surface 21A and rolling contact surface 23A of thrust needle roller bearing 2 serving as contact surfaces to at least 20 volume %, the distribution of nitrogen concentration formed in step (S30), the quenching temperature in step (S40), the tempering temperature in step (S50), the machining allowance in step (S60), or the like, for example, can be adjusted.

Furthermore, to set the nitrogen concentration in radially inner surface 12E of inner ring 12 to not more than 0.05 mass %, step (S30) may be carried out after covering radially inner surface 12E with a jig or a coading layer, for example.

To bring about a state where, in a cross section perpendicular to the contact surfaces, five or more carbonitrides having a diameter of not more than 0.5 µm are present per 100 µm² in surface layer portions 11B, 12B, 13B, 21B, and 23B, the quenching temperature in step (S40), the tempering temperature in step (S50), or the like, for example, can be adjusted.

### (Second Embodiment)

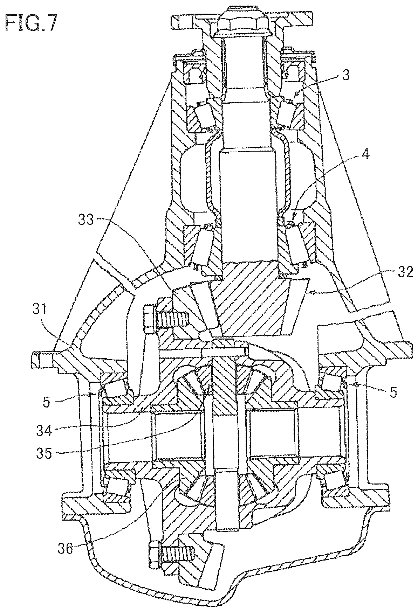

Next, a differential of a vehicle including a tapered roller bearing according to a second embodiment as another embodiment of the present invention will be described. Fig. 7 shows a structure of a differential of a vehicle including a tapered roller bearing according to the present embodiment. In this differential, a gear shaft serving as a transmission shaft is supported by the tapered roller bearing. Referring to Fig. 7, this differential includes a drive pinion 32 supported rotatably relative to housing 31 with two tapered roller bearings 3 and 4, a ring gear 33 engaged with drive pinion 32, a differential gear case 34 to which ring gear 33 is attached and being supported rotatably relative to housing 31 with a pair of tapered roller bearings 5, a pinion 35 arranged inside differential gear case 34, and a side gear 36 engaged with pinion 35. Tapered roller bearings 3, 4, 5, drive pinion 32, ring gear 33, differential gear case 34, pinion 35, and side gear 36 are housed in housing 31 filled with a gear oil. This gear oil also serves as a lubricant for above-described tapered roller bearings 3, 4 and 5. For supporting the shaft of drive pinion 32 and the shaft of differential gear case 34 to which ring gear 33 is attached, a gear shaft support device in which tapered roller bearings 3, 4 and 5, each serving as the tapered roller bearing of the present embodiment, are used is employed. The above-described differential can be used for a two-wheel vehicle, for example.

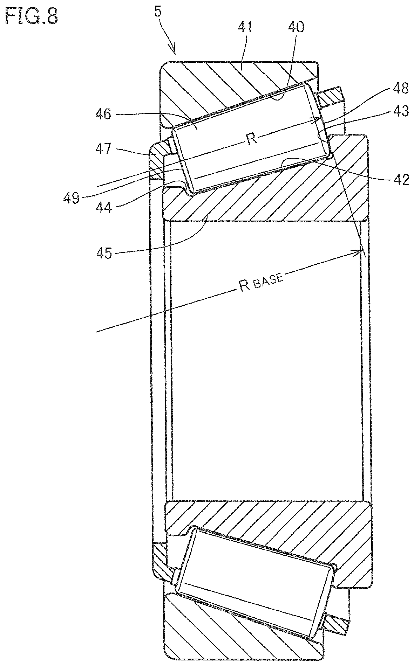

Next, tapered roller bearing 5 will be described as a representative example of the tapered roller bearing according to the above-described embodiment. Referring to Fig. 8, tapered roller bearing 5 includes an outer ring 41 having a conical outer ring raceway surface 40, an inner ring 45 having a conical inner ring raceway surface 42 and provided with a larger flange surface 43 on the larger diameter side of this inner ring raceway surface 42 and a smaller flange surface 44 on the smaller diameter side, a plurality of tapered rollers 46 arranged rollably between outer ring raceway surface 40 and inner ring raceway surface 42, and a cage 47 holding tapered rollers 46 at predetermined intervals in the circumferential direction.

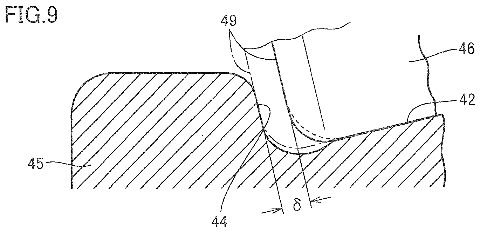

Referring to Fig. 9, smaller flange surface 44 of inner ring 45 is finished as a ground surface lying in parallel to a smaller end face 49 of tapered roller 46 arranged in contact with inner ring raceway surface 42. In an initial assembled state indicated by alternate long and short dash line in Fig. 9, smaller flange surface 44 of inner ring 45 come into surface contact with smaller end face 49 of tapered roller 46. A gap δ between smaller flange surface 44 of inner ring 45 and smaller end face 49 of tapered roller 46 in a state where tapered roller 46 indicated by the solid line is settled into a regular position, that is, in the use state of the bearing where the larger end face of tapered roller 46 comes into contact with the larger flange surface of inner ring 45 to thereby guide the tapered roller is adjusted to fall within a dimensional regulation range where δ ≤ 0.4 mm.

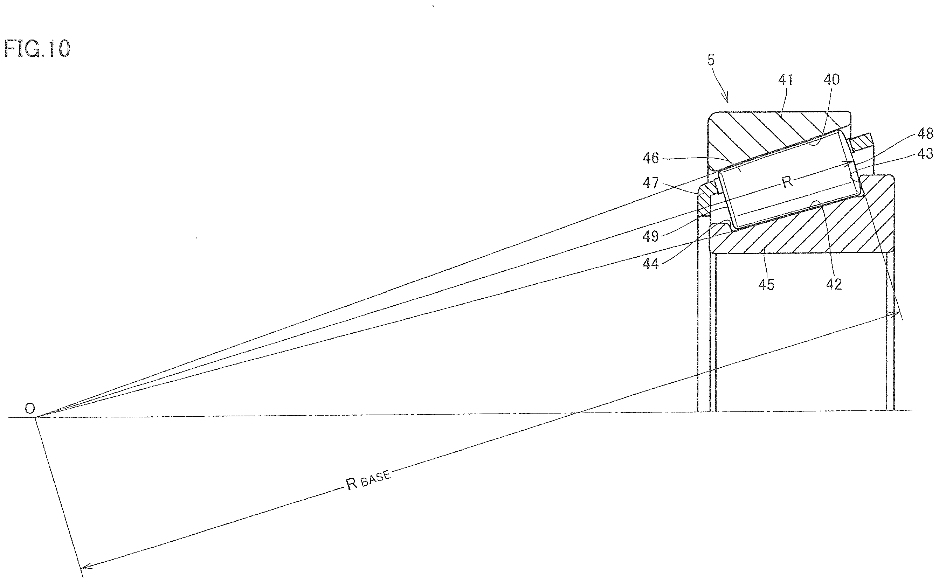

As shown in Fig. 10, the respective vertices of a conical surface including the outer circumferential surface of tapered roller 46, a conical surface including outer ring raceway surface 40 and a conical surface including inner ring raceway surface 42 are in agreement with one another at a point O on the center line of tapered roller bearing 5. A ratio R/R_{BASE} between a radius of curvature R of larger end face 48 of tapered roller 46 and a distance R_{BASE} from point O to larger flange surface 43 of inner ring 45 ranges from 0.75 to 0.87. Larger flange surface 43 has been ground such that surface roughness Ra becomes 0.12 µm, for example.

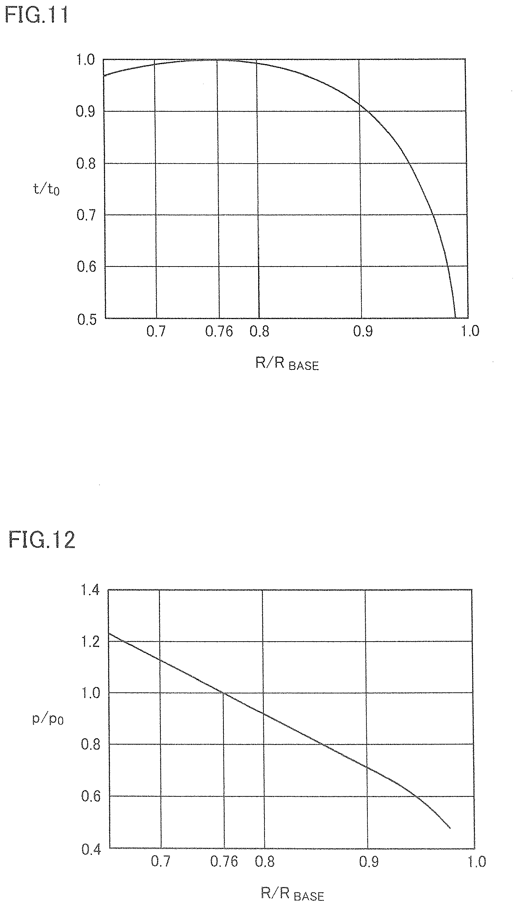

Fig. 11 shows the result of calculating the thickness of an oil film formed between the larger flange surface of the inner ring and the larger end face of the tapered roller by means of the Kama's formula. In Fig. 11, the vertical axis indicates a ratio t/t0 of oil film thickness t relative to oil film thickness t0 when R/R_{BASE} = 0.76 holds. Oil film thickness t is maximized when R/R_{BASE} = 0.76 holds, and rapidly decreases when R/R_{BASE} exceeds 0.9.

On the other hand, Fig. 12 shows the result of calculating a maximum Hertzian stress p between the larger flange surface of the inner ring and the larger end face of the tapered roller. In Fig. 12, the vertical axis indicates a ratio p/p0 of maximum Hertzian stress p relative to a maximum Hertzian stress p0 when R/R_{BASE} = 0.76 holds. Maximum Hertzian stress p decreases monotonously with increase of R/R_{BASE}.

From the viewpoint of reducing torque loss and heat generation caused by sliding friction between the larger flange surface of the inner ring and the larger end face of the tapered roller, it is desirable to increase oil film thickness t and decrease maximum Hertzian stress p. With reference to the calculation results of Figs. 11 and 12 described above and based on the result of seizure resistance test which will be described later, an appropriate range of R/R_{BASE} can be determined as 0.75 to 0.87.

It is noted that although not shown, above-described tapered roller bearings 3 and 4 also have a structure similar to that of above-described tapered roller bearing 5. In the present embodiment, smaller flange surface 44 of inner ring 45 is described as a ground surface, but can be a turned surface for cost reduction.

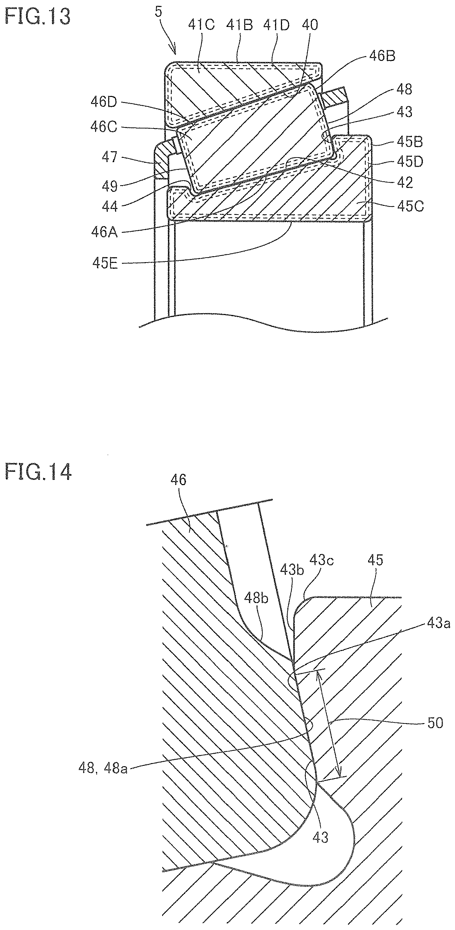

Furthermore, outer ring 41, inner ring 45 and tapered roller 46 serving as bearing parts are made of quench-hardened steel containing at least 0.60 mass % and not more than 1.50 mass % of carbon, at least 0.15 mass % and not more than 2.50 mass % of silicon, at least 0.30 mass % and not more than 1.50 mass % of manganese, and at least 0.20 mass % and not more than 2.00 mass % of chromium with the rest consisting of an impurity, for example, SUJ2 which is a JIS high-carbon chromium bearing steel. In regions including outer ring raceway surface 40, inner ring raceway surface 42, larger flange surface 43, smaller flange surface 44, and the surface of the tapered roller (larger end face 48, smaller end face 49 and tapered roller rolling surface 46A serving as a rolling contact surface) serving as contact surfaces, nitrogen enriched layers 41D, 45D and 46D having a nitrogen concentration higher than in inner portions 41C, 45C and 46C are respectively formed as shown in Fig. 13. The average nitrogen concentration in surface layer portions 41B, 45B and 46B having a distance of not more than 20 µm from the contact surfaces which are the surfaces of nitrogen enriched layers 41D, 45D and 46D, respectively, is at least 0.3 mass %. Furthermore, the quantity of residual austenite in each of whole outer ring 41, whole inner ring 45 and whole tapered roller 46 is not more than 20 volume %.

In tapered roller bearing 5 according to the above-described embodiment, seizure between larger end face 48 of tapered roller 46 and larger flange surface 43 of inner ring 45 is restrained by adjusting the value of R/R_{BASE} to range from 0.75 to 0.87. Furthermore, outer ring 41, inner ring 45 and tapered roller 46 are high-strength bearing parts in which the nitrogen concentration in surface layer portions 41B, 45B and 46B under the contact surfaces is set to at least 0.3 mass % and the whole average quantity of residual austenite is set to not more than 20 volume %. Accordingly, a tapered roller bearing is obtained in which dimensional stability is improved while achieving improvement in durability to withstand rolling fatigue in a severe environment including a foreign-substance intruding environment and further restraint of seizure by improvement in temper softening resistance. As a result, tapered roller bearing 5 has high durability and excellent dimensional stability.

It is noted that steel constituting outer ring 41, inner ring 45 and tapered roller 46 may further contain at least either one of not more than 0.5 mass % of nickel and not more than 0.2 mass % of molybdenum. Accordingly, the steel is improved in quenchability, and bearing parts of a large-sized rolling bearing can be obtained.

In outer ring 41, inner ring 45 and tapered roller 46, five or more carbonitrides having a diameter of not more than 0.5 µm are preferably present per 100 µm² in surface layer portions 41B, 45B and 46B under the contact surfaces (outer ring raceway surface 40, inner ring raceway surface 42, larger flange surface 43, smaller flange surface 44, and the surface of the tapered roller (larger end face 48, smaller end face 49 and tapered roller rolling surface 46A serving as the rolling contact surface)). By the presence of a large number of such fine carbonitrides in surface layer portions 41B, 45B and 46B, surface layer portions 41B, 45B and 46B are improved more in durability, so that outer ring 41, inner ring 45 and tapered roller 46 having excellent durability are obtained. More preferably, ten or more of the above-described carbides are present in the above-described regions. It is noted that the presence (numbers) of the above-described carbides can be checked by, for example, observing the above-described regions with a scanning electron microscope (SEM) and subjecting the observation result to image analysis processing.

Furthermore, in outer ring 41, inner ring 45 and tapered roller 46, the quantity of residual austenite in the regions having a depth of 50 µm from the contact surfaces is preferably at least 20 volume %. Accordingly, durability of outer ring raceway surface 40, inner ring raceway surface 42, larger flange surface 43, smaller flange surface 44, and the surface of the tapered roller (larger end face 48, smaller end face 49 and tapered roller rolling surface 46A serving as the rolling contact surface) serving as the contact surfaces, and in particular, durability of the rolling contact surface in a foreign-substance intruding environment can be improved.

Referring to Fig. 13, the nitrogen concentration in a radially inner surface 45E of above-described inner ring 45 can be set to not more than 0.05 mass %. Accordingly, the fitted state of inner ring 45 over a member such as a shaft is stabilized.

Next, a variation of the tapered roller bearing according to the above-described embodiment will be described. The tapered roller bearing according to the present variation basically has a structure and effects similar to those of the tapered roller bearing according to the above-described embodiment. As will be described below, however, the present variation differs from the case of the above-described embodiment in terms of the structure of larger end face 48 of tapered roller 46 and larger flange surface 43 of inner ring 45.

Referring to Fig. 14, in the tapered roller bearing according to the present variation, larger flange surface 43 of inner ring 45 includes a base surface 43a and a flank 43b smoothly connected to the outer side of this base surface 43a and having an arcuate cross section. A chamfer 43c is provided on the outer side of flank 43b. Referring to Figs. 10 and 14, larger end face 48 of tapered roller 46 is formed by a spherical surface 48a having radius of curvature R which is appropriately smaller than distance R₀ from point O to larger flange surface 43 of inner ring 45. As shown in Fig. 14, a recess 48b having a circular planar shape is provided at a central portion of this spherical surface 48a. The outer circumferential end of this recess 48b is positioned in proximity to the boundary (in a boundary region) between base surface 43a and flank 43b of larger flange surface 43.

Tapered roller 46 rolls with larger end face 48 being pressed against larger flange surface 43 during use of the bearing. Therefore, part of spherical surface 48a comes into contact with base surface 43a to produce a contact ellipse 50 as shown in Fig. 14. The boundary between flank 43b and base surface 43a is provided in proximity to the outer edge of this contact ellipse 50. Accordingly, flank 43b and spherical surface 48a form an acute wedge-shaped gap in close proximity to contact ellipse 50.

Contact ellipse 50 becomes larger as the axial load during use of the bearing is higher. Assuming a maximum contact ellipse under an allowable maximum axial load, tapered roller bearing 5 according to the present variation is designed such that the boundary between flank 43b and base surface 43a lies in proximity to the outer edge of this maximum contact ellipse. Accordingly, the wedge-shaped gap into which the lubricant is drawn can be formed appropriately over the entire used load range.

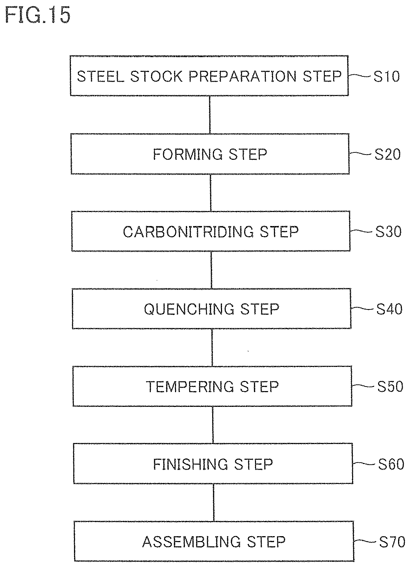

Next, a method for manufacturing the bearing parts and the rolling bearing according to the above-described embodiment will be described. Referring to Fig. 15, first, a steel stock preparation step is carried out as step (S10). In this step (S10), a steel stock made of steel containing at least 0.60 mass % and not more than 1.50 mass % of carbon, at least 0.15 mass % and not more than 2.50 mass % of silicon, at least 0.30 mass % and not more than 1.50 mass % of manganese, and at least 0.20 mass % and not more than 2.00 mass % of chromium with the rest consisting of an impurity, or steel containing at least 0.60 mass % and not more than 1.50 mass % of carbon, at least 0.15 mass % and not more than 2.50 mass % of silicon, at least 0.30 mass % and not more than 1.50 mass % of manganese, and at least 0.20 mass % and not more than 2.00 mass % of chromium, and further containing at least either one of not more than 0.5 mass % of nickel and not more than 0.2 mass % of molybdenum with the rest consisting of an impurity, for example, high-carbon chromium bearing steel, such as JIS SUJ2, SUJ3, SUJ4, and SUJ5. Specifically, for example, bar steel, steel wire or the like having the above-described component composition is prepared.

Next, a forming step is carried out as step (S20). In this step (S20), machining, such as forging or turning, is carried out on the bar steel, steel wire or the like prepared in step (S10), for example, so that formed members formed into the shape of outer ring 41, inner ring 45 and tapered roller 46 are produced.

Next, a carbonitriding step is carried out as step (S30). In this step (S30), the formed member produced in step (S20) is carbonitrided. This carbonitriding can be carried out as will be described below, for example. First, the above-described formed member is preheated for a time at least 30 minutes and not more than 90 minutes in the temperature range of at least 780°C and not more than 820°C. Next, the preheated formed member is heated in an atmosphere in which an ammonia gas is further introduced into an endoergic gas, such as a RX gas, adjusted in carbon potential by the addition of a propane gas or a butane gas as an enriched gas to be carbonitrided. The temperature of carbonitriding can be set to at least 820°C and not more than 880°C, for example. The time of carbonitriding can be set in accordance with the nitrogen concentration of a nitrogen enriched layer to be formed in the formed member, and can be set to, for example, at least four hours and not more than twelve hours, preferably to at least four hours and not more than seven hours. Accordingly, the nitrogen enriched layers can be formed while restraining decarburization of the formed member.

Next, a quenching step is carried out as step (S40). In this step (S40), the formed member with the nitrogen enriched layer formed therein by carbonitriding in step (S30) is rapidly cooled down from a predetermined quenching temperature to be quenched. This quenching temperature can be set to, for example, at least 820°C and not more than 880°C, and preferably to at least 850°C and not more than 880°C. The quenching treatment can be carried out by, for example, dipping the formed member in a quenching oil as a coolant kept at a predetermined temperature. In this step (S40), a region in the formed member to be a surface layer portion under a contact surface is preferably cooled at a cooling rate of at least 20°C/sec on average in a temperature range from the quenching temperature to 600°C and at least 30°C/sec on average in a temperature range from the quenching temperature to 400°C. Accordingly, the region decreased in quenchability by carbonitriding in step (S30), to be a surface layer portion, can be quench hardened reliably.

Next, a tempering step is carried out as step (S50). In this step (S50), the formed member subjected to the quenching treatment in step (S40) is subjected to a tempering treatment. Specifically, the tempering treatment is carried out by holding the formed member for a time period of at least half an hour and not more than three hours in an atmosphere heated to a temperature range of at least 180°C and not more than 240°C, for example. Furthermore, the tempering temperature may be at least 180°C and not more than 210°C.

Next, a finishing step is carried out as step (S60). In this step (S60), by machining the formed member subjected to the tempering treatment in step (S50), a contact surface to be in contact with another part, namely, outer ring raceway surface 40 of outer ring 41, inner ring raceway surface 42 of inner ring 45 and tapered roller rolling surface 46A of tapered roller 46 are formed. As the finishing, grinding can be carried out, for example. Through the above steps, outer ring 41, inner ring 45, tapered rollers 46, and the like, each serving as the bearing part according to the present embodiment, are completed.

Furthermore, an assembling step is carried out as step (S70). In this step (S70), outer ring 41, inner ring 45 and tapered rollers 46 produced through steps (S10) to (S60) are combined with separately prepared cage 47 and the like to assemble tapered roller bearing 5 according to the above-described embodiment. Accordingly, the method for manufacturing the rolling bearing according to the above-described embodiment is completed.

Here, in the above-described step (S30), the formed member is carbonitrided such that the nitrogen concentration in surface layer portions 41B, 45B and 46B under the contact surfaces becomes at least 0.3 mass % by the finishing in subsequent step (S60). That is, in consideration of a machining allowance in step (S60) and the like, nitrogen enriched layers 41D, 45D and 46D having a nitrogen amount adjusted such that the nitrogen concentration in the surface layer portions after the completion of the contact surfaces can be at least 0.3 mass % are formed.

Furthermore, in above-described step (S50), the formed member is subjected to the tempering treatment such that the whole average quantity of residual austenite in the formed member is not more than 20 volume %.

In a finished product, to set the quantity of residual austenite in regions having a depth of 50 µm from outer ring raceway surface 40, inner ring raceway surface 42 and tapered roller rolling surface 46A serving as contact surfaces to at least 20 volume %, the distribution of nitrogen concentration formed in step (S30), the quenching temperature in step (S40), the tempering temperature in step (S50), the machining allowance in step (S60), or the like, for example, can be adjusted.

Furthermore, to set the nitrogen concentration in radially inner surface 45E of inner ring 45 to not more than 0.05 mass %, step (S30) may be carried out after covering radially inner surface 45E with a jig or a coading layer, for example.

To bring about a state where, in a cross section perpendicular to the contact surfaces, five or more carbonitrides having a diameter of not more than 0.5 µm are present per 100 µm² in surface layer portions 41B, 45B and 46B, the quenching temperature in step (S40), the tempering temperature in step (S50), or the like, for example, can be adjusted.

It is noted that tapered roller bearing 5 described in the above-described embodiment is an example of the tapered roller bearing of the present invention. The tapered roller bearing of the present invention is applicable to tapered roller bearings of various forms.

### Examples

### (Example 1)

An experiment was carried out to study the influence of the nitrogen concentration in the surface layer portions exerted on durability of a raceway ring of a rolling bearing. Specifically, a rolling fatigue life test was carried out with an impression formed at the rolling contact surface of a raceway ring (inner ring). The procedure of the experiment will be described below.

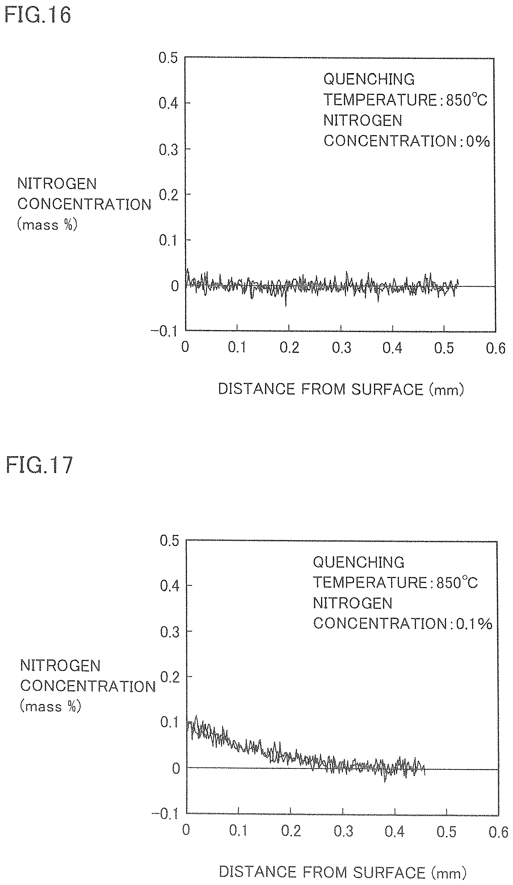

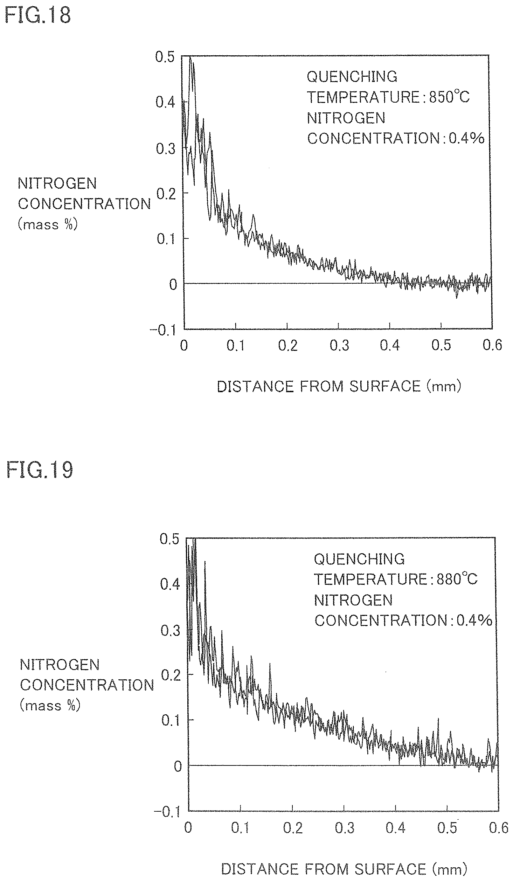

The test was carried out with a JIS 6206 deep groove ball bearing (having an inner diameter of 30 mm, an outer diameter of 62 mm, a width of 16 mm, nine rolling elements, and made of SUJ2) and a JIS 30206 tapered roller bearing (bearing parts made of JIS SUJ2). First, an inner ring was produced through a procedure similar to that of the above-described embodiment. At this time, the distribution of concentration of nitrogen which intrudes to the vicinity of the inner ring surface was controlled by adjusting the undecomposed ammonia partial pressure, hydrogen partial pressure, carbon activity, heat treatment time, and quenching temperature in an atmosphere during carbonitriding. For comparison, inner rings not subjected to carbonitriding were also produced. As a result, inner rings having four types of distributions of nitrogen concentration as shown in Figs. 16 to 19 were obtained. Here, in Figs. 16 to 19, the horizontal axis indicates the distance from the surface (rolling contact surface) and the vertical axis indicates the nitrogen concentration.

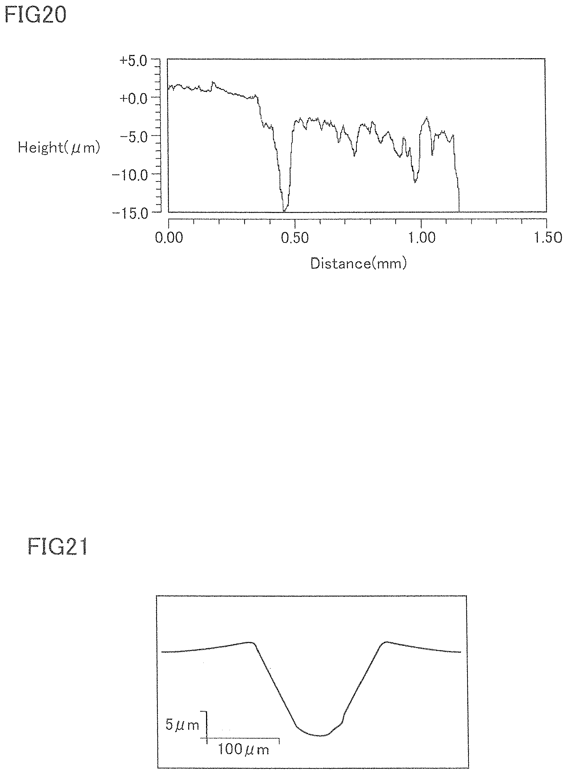

Next, an impression was formed at each obtained inner ring. Here, as an evaluation method of rolling bearing life simulating an actual use environment, a life test under foreign-substance mixed lubrication may be carried out. This test method is to evaluate the flexing life of a rolling bearing by operating it with particles having a particle diameter of 100 µm to 180 µm (having a hardness of approximately 800 HV) produced by gas atomization mixed into the lubricant of the rolling bearing. The reason for setting the particle diameter to 100 µm to 180 µm is because hard foreign substances having a particle diameter of approximately 100 µm at maximum may be mixed in an actual use environment. Fig. 20 shows a surface shape (impression shape) of a raceway ring damaged by the life test under this foreign-substance mixed lubrication. In Fig. 20, the horizontal axis indicates the distance from a reference point along the surface (rolling contact surface) and the vertical axis indicates the height. A region from the reference point on the horizontal axis to the vicinity of 0.3 mm corresponds to an initial rolling contact surface, a region from 0.3 mm to the vicinity of 1.1 mm corresponds to an impression, and a region beyond 1.1 mm corresponds to a detached portion. It is seen from Fig. 20 that an impression formed by the above-described hard foreign substance has a depth of approximately 15 µm to 20 µm.

The shape and microstructure of a protrusion of the impression is a major factor that determines the life. The shape of the protrusion of the impression is considered to be determined by a microstructure of a material down to the impression depth. The microstructure of steel varies depending on the nitrogen concentration. From these, the life in an environment where a hard foreign substance intrudes is considered to depend not only on the nitrogen concentration in the surface but also on the nitrogen concentration from the surface to the impression depth.

The impression depth becomes approximately 20 µm at maximum as described above. From this, the specification of the present application and the like define a region from the surface to a depth of 20 µm as a surface layer portion and an average nitrogen concentration in the surface layer portion as a "nitrogen concentration in the surface layer portion." Specifically, the nitrogen concentration in this surface layer portion can be examined by performing a linear analysis on a cross section perpendicular to the surface in the depth direction by EPMA (Electron Probe Micro Analysis) to calculate the average value from the surface to a depth of 20 µm.

In light of the above result of study, an impression was formed at the inner ring by pressing a conical diamond Rockwell hardness measuring indenter (an indenter having a spherical surface of a curvature of 0.2 mm at the vertex of a cone having a vertex angle of 120°) against the center of the rolling contact surface (the center of groove bottom) at a load of 196N. By measuring the shape of the formed impression by a three-dimensional surface shape device, it was confirmed that the protrusion on the peripheral of the impression had a substantially symmetric shape in the axial direction and the circumferential direction with the center of the impression serving as the axis of symmetry. Fig. 21 shows a representative shape of impression. Thirty impressions were given at each inner ring, and were formed at regular intervals in the circumferential direction (i.e., at every central angle of 12°).

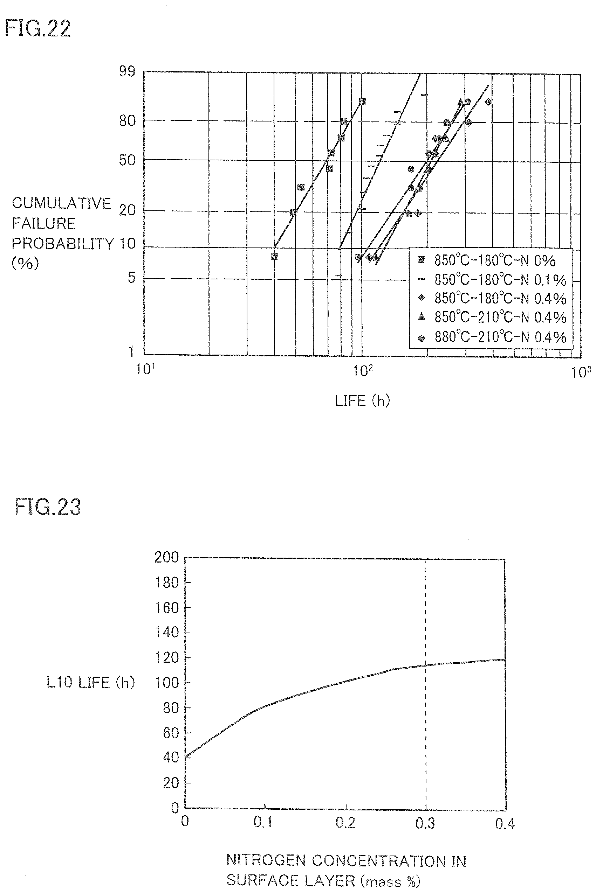

The inner ring thus produced was combined with a common outer ring not subjected to carbonitriding or not having any impression formed therein, a rolling element, a cage, and the like to assemble a bearing. The obtained bearing was then subjected to a life test. The test result is shown in Fig. 22.

In Fig. 22, the horizontal axis indicates the life (the time until detachment occurs after the start of test), and the vertical axis indicates the cumulative failure probability. In the explanatory notes of Fig. 22, "quenching temperature - tempering temperature - nitrogen concentration in surface layer" are indicated. For example, the indication of 850°C-180°C-N 0.4% represents a quenching temperature of 850°C, a tempering temperature of 180°C, and a nitrogen concentration in the surface layer portion of 0.4 mass %. Referring to Fig. 22, it is seen that the life becomes longer as the nitrogen concentration in the surface layer portion increases. Here, the relation between the nitrogen concentration in the surface layer portion and the time at which the cumulative failure probability reaches 10% (L10 life) is shown in Fig. 23. As shown in Fig. 23, while L10 life becomes longer as the nitrogen concentration in the surface layer portion increases, improvement in L10 life tends to be saturated with increase in nitrogen concentration. Improvement in the life is slow where the nitrogen concentration is at least 0.3 mass %. From this, it is understood that setting the nitrogen concentration in the surface layer portion to at least 0.3 mass % is effective for longer life.

### (Example 2)

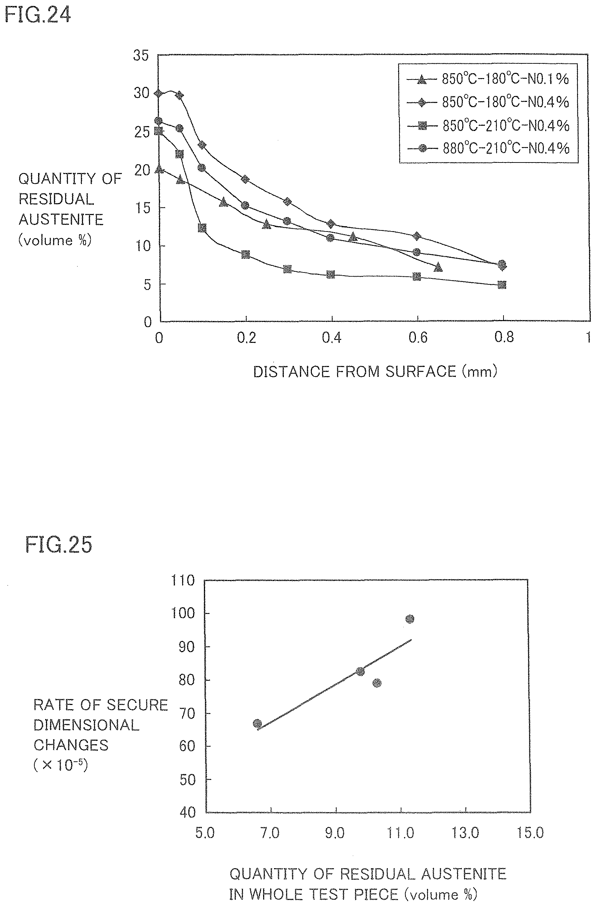

An experiment was carried out to study the influence of the quantity of residual austenite on secular dimensional changes. Using SUJ2 as a raw material, ring-shaped test pieces having an outer diameter of φ 60 mm, an inner diameter of φ 54 mm, and a width t of 15 mm were produced with the quenching temperature, tempering temperature and the nitrogen concentration in the surface layer portion varied. A heat treatment was carried out to heat each of these test pieces to 230°C and keep it for two hours. The dimensional difference in outer diameter before and after the heat treatment was divided by the outer diameter before the heat treatment to calculate the rate of secure dimensional changes. The test result is shown in Table 1. On the other hand, the distribution of the quantity of residual austenite in each of the above-described test pieces is shown in Fig. 24. The average value in each test piece was calculated from this distribution of the quantity of residual austenite in Fig. 24, and the relation with the rate of secure dimensional changes of each test piece previously calculated was examined. The relation between the average quantity of residual austenite of the whole test piece and the rate of secure dimensional changes is shown in Fig. 25.

**[Table 1]**

| Steel Type | Heat Treatment | | | Rate of Secure Dimensional Changes (×10⁵) |
|---|---|---|---|---|
| | Quenching Temperature (°C) | Tempering Temperature (°C) | Nitrogen Concentration in Surface Layer (mass %) | |
| SUJ2 | 850 | 180 | 0.0 | 53.6 |
| | 850 | 180 | 0.1 | 82.5 |
| | 850 | 180 | 0.4 | 98.1 |
| | 850 | 210 | 0.4 | 66.8 |
| | 880 | 210 | 0.4 | 78.9 |

Referring to Table 1 and Fig. 25, it is confirmed that the rate of secure dimensional changes can be reduced by raising the tempering temperature up to 210°C to reduce the average quantity of residual austenite of the whole test piece. It is understood that setting the average quantity of residual austenite to not more than 20 volume %, preferably not more than 15 volume % is effective from the viewpoint of reducing the rate of secure dimensional changes, and particularly by setting to not more than 11 volume %, the rate of secure dimensional changes can be reduced to be less than 100×10⁻⁵.

### (Example 3)

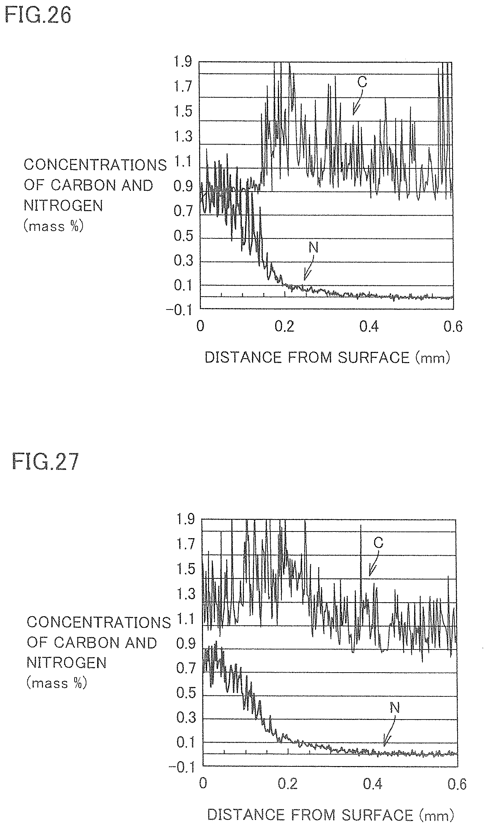

An experiment was carried out to study the distributed state of carbonitrides in a surface layer portion under a contact surface. Under a procedure similar to that in the case of the above-described embodiment, a test piece of SUJ2 was produced on the condition that the carbon activity during carbonitriding was adjusted to restrain disappearance of carbide due to solution. This manufacturing condition corresponds to the manufacturing condition for the test piece whose long life was confirmed in the above-described Example 1. Specifically, the quenching temperature was 850°C, the tempering temperature was 180°C, and the nitrogen concentration in the surface layer portion was 0.3 mass % (Example A). On the other hand, for comparison, a test piece was produced similarly on the condition that decarburization occurred in the vicinity of the surface (Comparative Example). The distributions of carbon concentration and nitrogen concentration in the vicinity of the surface in the test pieces of Comparative Example and Example A are shown in Figs. 26 and 27, respectively.

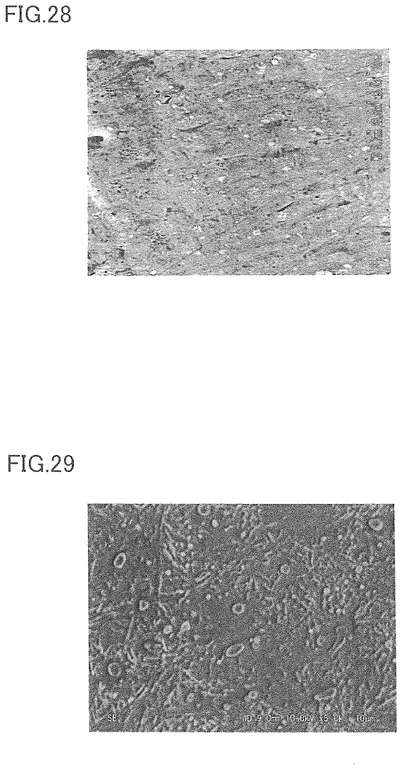

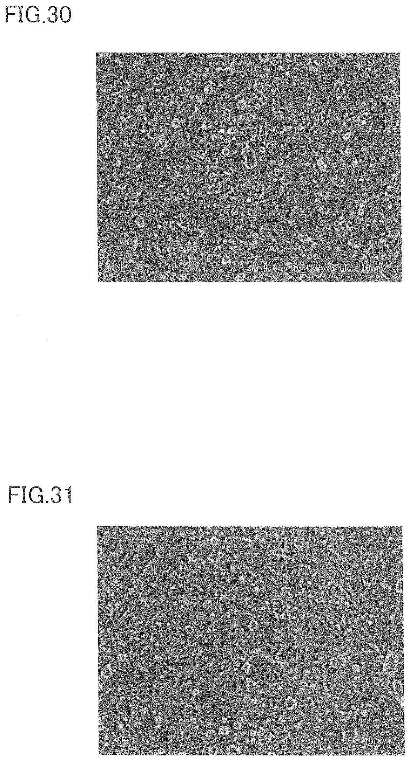

Referring to Figs. 26 and 27, in the test piece of the Comparative Example, the carbon concentration in the vicinity of the surface decreases and decarburization is confirmed, while in the test piece of Example A, the carbon concentration in the vicinity of the surface is maintained at a level substantially equivalent to that in the inside. A SEM photograph of the surface layer portion of the Comparative Example and a SEM photograph of the surface layer portion of Example A are shown in Figs. 28 and 29, respectively. SEM photographs of surface layer portions of test pieces (Example B) having a quenching temperature of 880°C, a tempering temperature of 210°C and a nitrogen concentration in the surface layer portion of 0.3 mass % are shown in Figs. 30 and 31.

Here, for Examples A and B corresponding to the manufacturing condition on which a long life was confirmed in above-described Example 1, the number of carbonitrides having a diameter of not more than 0.5 µm considered to contribute to precipitation strengthening was calculated based on SEM photographs of the surface layer portion (SEM photographs of a cross section perpendicular to the surface). The calculation result is shown in Table 2.

**[Table 2]**

| Quenching Temperature (°C) | Tempering Temperature (°C) | Nitrogen Concentration (mass %) | No | The Number of Carbides |
|---|---|---|---|---|
| 850 | 180 | 0.3 | 1 | 16.5 |
| | | | 2 | 12.4 |
| | | | 3 | 12.9 |
| | | | average | 13.9 |
| 880 | 210 | 0.3 | 1 | 6.5 |
| | | | 2 | 8.6 |
| | | | 3 | 5.4 |
| | | | average | 6.8 |

The number of carbonitrides present in a region within 100 µm² was checked three times (at three positions) for each test piece to calculate the average value. As shown in Table 2, it was confirmed that in Examples A and B in which a long life was confirmed, five or more carbonitrides having a diameter of not more than 0.5 µm were present within 100 µm².

### (Example 4)

An experiment was carried out to confirm the effect achieved by setting the values of R/R_{BASE} and δ described above to appropriate ranges.

A tapered roller bearing was prepared in which radius of curvature R of the larger end face of a tapered roller was adjusted in such a range where above-described R/R_{BASE} = 0.75 to 0.87, the larger flange surface of an inner ring had a surface roughness Ra of 0.12 µm, the smaller flange surface was formed by a ground surface lying in parallel to the smaller end face of the tapered roller, and gap δ was adjusted to fall within the range of δ ≤ 0.4 mm (Example). The dimensions of the bearing had an inner diameter of 40 mm and an outer diameter of 68 mm in any case. On the other hand, for comparison, a tapered roller bearing was also prepared in which the value of R/R_{BASE} fell outside the above-described range, the smaller flange surface of the inner ring was inclined outwardly relative to the smaller end face of the tapered roller, and gap δ exceeded 0.4 mm (Comparative Example). The dimensions of each bearing are equal to those in the above-described Example. More specifically, four types of tapered roller bearings corresponding to the Example shown in Table 3 and three types of tapered roller bearings corresponding to the Comparative Example were prepared.

**[Table 3]**

| Tapered Roller Bearing | Radius of Curvature R/R_{BASE} | Surface Roughness Rₐ (Mm) | Limit Rotating Speed for Occurrence of Seizure in Seizure Resistance Test (rpm) | The Number of Rotations before Settlement in Running-In Test (number) | |
|---|---|---|---|---|---|
| | | | | Average Value | Standard Deviation |
| Example C | 0.75 | 0.12 | 2700 | - | - |
| Example D | 0.80 | 0.12 | 3500 | 2.96 | 0.56 |
| Example E | 0.85 | 0.12 | 3000 | - | - |
| Example F | 0.87 | 0.12 | 2700 | - | - |
| Comparative Example A | 0.70 | 0.12 | 2200 | - | - |
| Comparative Example B | 0.94 | 0.12 | 2500 | 6.00 | 1.33 |
| Comparative Example C | 0.94 | 0.25 | 2200 | - | - |

Then, for each of the tapered roller bearings of the above-described Example and Comparative Example, a seizure resistance test was carried out with a rotary testing machine. A running-in test was also carried out for the tapered roller bearings of Example D and Comparative Example B. The number of samples in the running-in test was 66 for Example D and 10 for Comparative Example B. The test conditions for the seizure resistance test are indicated below.
Applied load: 19.61 kN
Rotating speed: 1000 to 3500 rpm
Lubricant: turbine VG56 (a lubrication amount of 40 ml/min, a lubrication temperature of 40°C±3°C)

The test result is shown in Table 3. Seizure in the seizure resistance test occurred between the larger flange surface of the inner ring and the larger end face of the tapered roller.

In each of the tapered roller bearings of the Example, the limit rotating speed for the occurrence of seizure in the seizure resistance test is at least 2700 rpm, which means that the friction resistance between the larger flange surface of the inner ring and larger end face of the tapered roller is small. On the other hand, in the tapered roller bearings of the Comparative Example, the limit rotating speed for the occurrence of seizure is not more than 2500 rpm, which may be disadvantageous under the usual use condition of a differential or the like. Comparative Example C in which surface roughness Ra of the larger flange surface is high exhibits a limit rotating speed for the occurrence of seizure smaller than in Comparative Example B having an identical radius of curvature R.

According to the result of running-in test, the average value of the number of rotations until each tapered roller settled into the regular position is six in the Comparative Example, while it is 2.96 in the Example, which is about half. It is understood that the standard deviation of fluctuations in the number of rotations is small in the Example, so that the running-in time can be shortened stably.

### (Example 5)

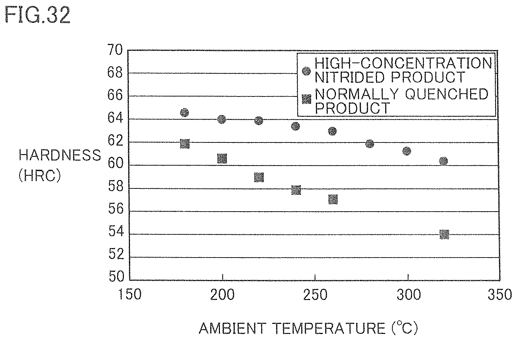

An experiment was carried out to confirm improvement in temper softening resistance caused by forming nitrogen enriched layers. First, a test piece of JIS SUJ2 was prepared. Then, this was heated to 850°C in an atmosphere where an ammonia gas was added to an RX gas and kept for 180 minutes, so that the nitrogen concentration in the surface layer portion became at least 0.3 mass %. Then, a quench-hardened sample was produced (Example; high-concentration nitrided product). On the other hand, for comparison, a similar test piece was prepared. This was heated to 850°C in an RX gas atmosphere and kept for 80 minutes. Then, a quench-hardened sample was produced (Comparative Example; normally quenched product). A heat treatment was carried out to heat the thus obtained samples of the Example and the Comparative Example in an atmosphere kept at a predetermined temperature, and the surface hardness after the heat treatment was measured. The experimental result is shown in Fig. 32.

Referring to Fig. 32, the samples of the Example had higher surface hardness than the samples of the Comparative Example at whichever ambient temperature they were heated. As the ambient temperature increases, the difference in hardness therebetween tends to be larger. From this, it was confirmed that the temper softening resistance was improved by setting the nitrogen concentration in the surface layer portion to at least 0.3 mass %. This improvement in temper softening resistance is considered to contribute to improvement in seizure resistance.

Although in the above-described first embodiment and Examples 1 to 3, components of the rolling bearing have been described as an exemplary machine part of the present invention, the machine part of the present invention is not limited to this, but is applicable to various machine parts having a contact surface to be in contact with another part, such as components of a universal joint or a gear.

It should be understood that the embodiments and examples disclosed herein are illustrative and non-restrictive in every respect. The scope of the present invention is defined by the claims.

### INDUSTRIAL APPLICABILITY

A machine part, a rolling bearing, a tapered roller bearing, and a method for manufacturing the machine part of the present invention may be particularly advantageously applied to a machine part, a rolling bearing, a tapered roller bearing, and a method for manufacturing the machine part required to simultaneously achieve improvement in durability and improvement in dimensional stability.

### REFERENCE SIGNS LIST

1 deep groove ball bearing; 2 thrust needle roller bearing; 3, 4, 5 tapered roller bearing; 11, 41 outer ring; 11A outer ring rolling contact surface; 11B, 12B, 13B, 21B, 23B, 41B, 45B, 46B surface layer portion; 11C, 12C, 13C, 21C, 23C, 41C, 45C, 46C inner portion; 11D, 12D, 13D, 21D, 23D, 41D, 45D, 46D nitrogen enriched layer; 12, 45 inner ring; 12A inner ring rolling contact surface; 12E, 45E radially inner surface; 13 ball; 13A ball rolling surface; 14, 24 cage; 21 raceway ring; 21A raceway ring rolling contact surface; 23A rolling contact surface; 31 housing; 32 drive pinion; 33 ring gear; 34 differential gear case; 35 pinion; 36 side gear; 40 outer ring raceway surface; 42 inner ring raceway surface; 43 larger flange surface; 43a base surface; 43b flank; 43c chamfer; 46A rolling surface; 48 larger end face; 48a spherical surface; 50 contact ellipse.

## Claims

1. A machine part constituted of steel containing at least 0.60 mass % and not more than 1.50 mass % of carbon, at least 0.15 mass % and not more than 2.50 mass % of silicon, at least 0.30 mass % and not more than 1.50 mass % of manganese, and at least 0.20 mass % and not more than 2.00 mass % of chromium with the rest consisting of an impurity,
an average quantity of residual austenite as a whole being not more than 20 volume %, **characterized in that** a nitrogen concentration in a surface layer portion under a contact surface to be in contact with another part is at least 0.3 mass %, wherein a surface layer portion indicates a region from a surface to a depth of 20 µm.

2. A machine part according to claim 1, the steel further containing at least either one of not more than 0.5 mass % of nickel and not more than 0.2 mass % of molybdenum with the rest consisting of an impurity.

3. The machine part according to claim 1, wherein, in said surface layer portion under said contact surface, five or more carbonitrides having a diameter of not more than 0.5 µm are present per 100 µm² in a section perpendicular to said contact surface.

4. The machine part according to claim 1, wherein the quantity of residual austenite in a region having a depth of 50 µm from said contact surface is at least 20 volume %.

5. The machine part according to claim 1, being a part constituting a bearing.

6. The machine part according to claim 5, being an inner ring of a rolling bearing and having a nitrogen concentration of not more than 0.05 mass % in a radially inner surface.

7. A rolling bearing, comprising:
a raceway member; and
a plurality of rolling elements arranged in contact with said raceway member,
at least either one of said raceway member and said rolling elements being the machine part as defined in claim 5.

8. A tapered roller bearing, comprising:
an outer ring having a conical outer ring raceway surface;
an inner ring having a conical inner ring raceway surface and being provided with a larger flange surface on a larger diameter side of said inner ring raceway surface and a smaller flange surface on a smaller diameter side;
a plurality of tapered rollers arranged rollably between said outer ring raceway surface and said inner ring raceway surface; and
a cage holding said tapered rollers at a predetermined spacing in a circumferential direction,
during use of the bearing, a larger end face of each of said tapered rollers being guided in contact with said larger flange surface of said inner ring,
R/R_{BASE} having a value ranging from 0.75 to 0.87 where R indicates a radius of curvature of said larger end face of each of said tapered rollers and R_{BASE} indicates a distance from a vertex of a conical surface including an outer circumferential surface of each of said tapered rollers to said larger flange surface of said inner ring,
at least any one of said outer ring, said inner ring and said tapered rollers being the machine part as defined in claim 1.

9. A tapered roller bearing, comprising:
an outer ring having a conical outer ring raceway surface;
an inner ring having a conical inner ring raceway surface and being provided with a larger flange surface on a larger diameter side of said inner ring raceway surface and a smaller flange surface on a smaller diameter side;
a plurality of tapered rollers arranged rollably between said outer ring raceway surface and said inner ring raceway surface; and
a cage holding said tapered rollers at a predetermined spacing in a circumferential direction,
during use of the bearing, a larger end face of each of said tapered rollers being guided in contact with said larger flange surface of said inner ring,
R/R_{BASE} having a value ranging from 0.75 to 0.87 where R indicates a radius of curvature of said larger end face of each of said tapered rollers and R_{BASE} indicates a distance from a vertex of a conical surface including an outer circumferential surface of each of said tapered rollers to said larger flange surface of said inner ring,
at least any one of said outer ring, said inner ring and said tapered rollers being the machine part as defined in claim 2.

10. The tapered roller bearing according to claim 8, wherein said larger flange surface of said inner ring has a surface roughness Ra ranging from 0.05 µm to 0.20 µm.

11. The tapered roller bearing according to claim 8, wherein a gap δ between said smaller flange surface of said inner ring and a smaller end face of each of said tapered rollers, left when said larger end face of each of said tapered rollers comes into contact with said larger flange surface of said inner ring, is controlled to be not more than 0.4 mm.

12. The tapered roller bearing according to claim 8, wherein said larger flange surface of said inner ring includes
a base surface to be in contact with said larger end face of each of said tapered rollers, and
a flank smoothly connecting with an outer side of said base surface and being curved in a direction spaced away from said larger end face of each of said tapered rollers.

13. The tapered roller bearing according to claim 12, wherein said flank has a sectional shape including an arcuate region.

14. The tapered roller bearing according to claim 12, wherein
a recess having a circular planar shape is provided at a central portion of said larger end face of each of said tapered rollers, and
an outer circumferential end of said recess is positioned in a boundary region between said base surface and said flank of said inner ring.

15. The tapered roller bearing according to claim 12, wherein the boundary between said base surface and said flank is positioned at an outer edge of a maximum contact ellipse produced by contact between said larger end face of each of said tapered rollers and said larger flange surface under an allowable maximum axial load of the bearing.

16. The tapered roller bearing according to claim 8, wherein, in said surface layer portion under said contact surface, five or more carbonitrides having a diameter of not more than 0.5 µm are present per 100 µm² in a section perpendicular to said contact surface.

17. A method for manufacturing a machine part, comprising the steps of:
producing a formed member by forming steel containing at least 0.60 mass % and not more than 1.50 mass % of carbon, at least 0.15 mass % and not more than 2.50 mass % of silicon, at least 0.30 mass % and not more than 1.50 mass % of manganese, and at least 0.20 mass % and not more than 2.00 mass % of chromium with the rest consisting of an impurity;
carbonitriding said formed member;
quench hardening said formed member having been carbonitrided;
tempering said formed member having been quench hardened; and
machining said formed member having been tempered, thereby forming a contact surface being a surface to be in contact with another part,
in the step of tempering said formed member, said formed member being tempered such that an average quantity of residual austenite of said formed member as a whole is not more than 20 volume %,
the steps of carbonitriding said formed member, quench hardening said formed member, tempering said formed member, and forming said contact surface being carried out such that, in said surface layer portion under said contact surface, five or more carbonitrides having a diameter of not more than 0.5 µm are present per 100 µm² in a section perpendicular to said contact surface, **characterized in that**
in the step of carbonitriding said formed member, said formed member is carbonitrided such that a nitrogen concentration in a surface layer portion under said contact surface is at least 0.3 mass % in the step of forming said contact surface, wherein a surface layer portion indicates a region from a surface to a depth of 20 µm.

18. A method for manufacturing a machine part according to claim 17, the formed steel further containing at least either one of not more than 0.5 mass % of nickel and not more than 0.2 mass % of molybdenum with the rest consisting of an impurity.

19. The method for manufacturing a machine part according to claim 17, wherein in the step of quench hardening said formed member, said formed member is quench hardened by cooling a region to be the surface layer portion under said contact surface at a cooling rate of at least 20°C/sec on average in a temperature range from a quenching temperature to 600°C and at least 30°C/sec on average in a temperature range from the quenching temperature to 400°C.

## Patentansprüche

1. Maschinenteil aus Stahl enthaltend mindestens 0,60 Masse% und nicht mehr als 1,50 Masse% Kohlenstoff, mindestens 0,15 Masse% und nicht mehr als 2,50 Masse% Silizium, mindestens 0,30 Masse% und nicht mehr als 1,50 Masse% Mangan, und mindestens 0,20 Masse% und nicht mehr als 2,00 Masse% Chrom mit dem Rest bestehend aus einer Unreinheit,
wobei eine durchschnittliche Menge eines verbleibenden Austenit im Gesamten nicht mehr als 20 Volumen% beträgt, **dadurch gekennzeichnet, dass** eine Stickstoffkonzentration in einem Oberflächenschichtabschnitt unter einer Kontaktoberfläche, sodass sie einen anderen Teil kontaktiert, mindestens 0,3 Masse% beträgt, wobei ein Oberflächenschichtabschnitt einen Bericht einer Oberfläche zu einer Tiefe von 20 µm angibt.

2. Maschinenteil nach Anspruch 1, wobei der Stahl des Weiteren mindestens einen von nicht mehr als 0,5 Masse% Nickel und nicht mehr als 0,2 Masse% Molybdän mit dem Rest bestehend aus einer Unreinheit enthält.

3. Maschinenteil nach Anspruch 1, wobei in dem Oberflächenschichtabschnitt unter der Kontaktoberfläche fünf oder mehr Karbonnitride einen Durchmesser von nicht mehr als 0,5 µm pro 100 µm² in einem Bereich senkrecht zu der Kontaktoberfläche vorhanden sind.

4. Maschinenteil nach Anspruch 1, wobei die Menge des verbleibenden Austenits in einem Bereich mit einer Tiefe von 50 µm von der Kontaktoberfläche mindestens 20 Volumen% ist.

5. Maschinenteil nach Anspruch 1, welches ein Teil ist, das ein Lager darstellt.

6. Maschinenteil nach Anspruch 5, welches ein Innenring eines Wälzlagers mit einer Stickstoffkonzentration von nicht mehr als 0,05 Masse% in einer radial inneren Oberfläche ist.

7. Wälzlager, umfassend:
ein Laufelement; und
eine Vielzahl von Wälzelementen, die so angeordnet sind, dass sie das Laufelement kontaktieren,
wobei mindestens eines der Laufelemente und Wälzelemente das Maschinenteil aus Anspruch 5 ist.

8. Kegelrollenlager, umfassend:
einen Außenring mit einer konischen Außenringlaufoberfläche;
einen Innenring mit einer konischen Innenringlaufoberfläche und ausgestattet mit einer größeren Flanschoberfläche auf einer größeren Durchmesserseite der Innenringlaufoberfläche und einer kleineren Flanschoberfläche auf einer kleineren Durchmesserseite;
eine Vielzahl Kegelrollen, die rollbar zwischen der Außenringlaufoberfläche und der Innenringlaufoberfläche angeordnet sind; und
einen Käfig, der die Kegelrollen mit einem vorbestimmten Abstand in einer umlaufenden Richtung hält,
wobei während der Verwendung des Lagers eine größere Endfläche einer jeden Kegelrolle in Kontakt mit der größeren Flanschoberfläche des Innenrings gesteuert wird,
wobei R/R_{BASE} einen Wert im Bereich von 0,75 bis 0,87 hat, bei dem R einen Krümmungsradius der größeren Endoberfläche einer jeden Kegelrolle angibt und R_{BASE} einen Abstand von einem Scheitelpunkt einer konischen Oberfläche einschließlich einer äußeren umlaufenden Oberfläche einer jeden Kegelrolle zur größeren Flanschoberfläche des Innenrings,
wobei mindestens einer der Außenringe, der Innenringe und der Kegelrollen das in Anspruch 1 beschriebene Maschinenteil ist.

9. Kegelrollenlager, umfassend:
einen Außenring mit einer konischen Außenringlaufoberfläche;
einen Innenring mit einer konischen Innenringlaufoberfläche und ausgestattet mit einer größeren Flanschoberfläche auf einer größeren Durchmesserseite der Innenringlaufoberfläche und einer kleineren Flanschoberfläche auf einer kleineren Durchmesserseite;
eine Vielzahl Kegelrollen die rollbar zwischen der Außenringlaufoberfläche und der Innenringlaufoberfläche angeordnet sind; und
einen Käfig, der die Kegelrollen mit einem vorbestimmten Abstand in einer umlaufenden Richtung hält,
wobei während der Verwendung des Lagers eine größere Endfläche einer jeden Kegelrolle in Kontakt mit der größeren Flanschoberfläche des Innenrings gesteuert wird,
wobei R/R_{BASE} einen Wert im Bereich von 0,75 bis 0,87 hat, bei dem R einen Krümmungsradius der größeren Endoberfläche einer jeden Kegelrolle angibt und R_{BASE} einen Abstand von einem Scheitelpunkt einer konischen Oberfläche einschließlich einer äußeren umlaufenden Oberfläche einer jeden Kegelrolle zur größeren Flanschoberfläche des Innenrings,
wobei mindestens einer der Außenringe, der Innenringe und der Kegelrollen das in Anspruch 2 beschriebene Maschinenteil ist.

10. Kegelrollenlager nach Anspruch 8, wobei die größere Flanschoberfläche des Innenrings eine Oberflächenrauheit Ra im Bereich von 0,05 µm bis 0,20 µm hat.

11. Kegelrollenlager nach Anspruch 8, wobei eine Lücke δ zwischen der kleineren Flanschoberfläche des Innenrings und einer kleineren Endfläche einer jeden der Kegelrollen, die übrig bleiben wenn die größere Endfläche einer jeden Kegelrolle mit der größeren Flanschoberfläche des Innenrings in Kontakt kommt, so kontrolliert wird, dass sie nicht mehr als 0,4 mm beträgt.

12. Kegelrollenlager nach Anspruch 8, wobei die größere Flanschoberfläche des Innenrings umfasst:
eine Grundoberfläche, die mit der größeren Endfläche einer jeden Kegelrolle in Kontakt ist, und
eine Flanke, die sich nahtlos mit einer Außenseite der Grundoberfläche verbindet und in eine Richtung weg von der größeren Endfläche einer jeden Kegelrolle gekrümmt ist.

13. Kegelrollenlager nach Anspruch 12, wobei die Flanke eine einteilige Form einschließlich eines bogenförmigen Bereichs hat.

14. Kegelrollenlager nach Anspruch 12, wobei
eine Aussparung mit einer kreisförmigen ebenen Form in einem zentralen Abschnitt der größeren Endfläche einer jeden Kegelrolle vorgesehen ist, und
ein äußeres umlaufendes Ende der Aussparung in einem Grenzbereich zwischen der Grundoberfläche und der Flanke des Innenrings positioniert ist.

15. Kegelrollenlager nach Anspruch 12, wobei die Grenze zwischen der Grundoberfläche und der Flanke an einer Außenkante einer maximalen Kontaktellipse positioniert ist, die durch den Kontakt zwischen der größeren Endfläche einer jeden Kegelrolle und der größeren Flanschoberfläche unter einer zulässigen maximalen Achslast des Lagers hergestellt wird.

16. Kegelrollenlager nach Anspruch 8, wobei in dem Oberflächenschichtbereich unter der Kontaktoberfläche fünf oder mehr Karbonnitride einen Durchmesser von nicht mehr als 5 µm pro 100 µm² vorhanden sind in einem Abschnitt senkrecht zur Kontaktoberfläche.

17. Verfahren zur Herstellung eines Maschinenteils, umfassend die folgenden Schritte:
Herstellen eines geformten Elements durch Stahlformen umfassend mindestens 0,60 Masse% und nicht mehr als 1,50 Masse% Kohlenstoff, mindestens 0,15 Masse% und nicht mehr als 2,50 Masse% Silizium, mindestens 0,30 Masse% und nicht mehr als 1,50 Masse% Mangan, und mindestens 0,20 Masse% und nicht mehr als 2,00 Masse% Chrom mit einem Restbestandteil aus einer Unreinheit;
Karbonitrieren des geformten Elements
Abschreckhärten des Elements, welches karbonitriert wurde;
Temperieren des geformten Elements welches abgeschreckgehärtet wurde; und
Maschinenbearbeitung des geformten Elements welches temperiert wurde, wodurch eine Kontaktoberfläche geformt wird, die eine Oberfläche ist, die mit einem anderen Teil in Kontakt ist,
wobei im Temperierschritt des geformten Elements das geformte Element so temperiert wird, dass eine Durchschnittsmenge eines verbleibenden Austenits des geformten Elements als Ganzes nicht mehr als 20 Volumen% ist,
wobei die Schritte des Karbonitrieren des geformten Elements, des Abschreckhärtens des geformten Elements, des Temperierens des geformten Elements und des Bildens einer Kontaktoberfläche so ausgeführt werden, dass in dem Oberflächenschichtabschnitt unter der Kontaktoberfläche fünf oder mehr Karbonitride mit einem Durchmesser von nicht mehr als 0,5 µm pro 100 µm² in einem Bereich senkrecht zur Kontaktoberfläche vorhanden sind, **dadurch gekennzeichnet, dass**
im Schritt des Karbonitrierens des geformten Elements das geformte Element so karbonitriert wird, dass eine Stickstoffkonzentration in einem Oberflächenschichtabschnitt unter der Kontaktoberfläche mindestens 0,3 Masse% im Schritt des Formens der Kontaktoberfläche ist, wobei ein Oberflächenschichtabschnitt einen Bereich von einer Oberfläche zu einer Tiefe von 20 µm angibt.

18. Verfahren zur Herstellung eines Maschinenteils nach Anspruch 17, wobei der geformte Stahl des Weiteren mindestens entweder nicht mehr als 0,5 Masse% Nickel und nicht mehr als 0,2 Masse% Molybdän mit dem Restbestandteil aus einer Unreinheit enthält.

19. Verfahren zur Herstellung eines Maschinenteils nach Anspruch 17, wobei in dem Schritt des Abschreckhärtens des geformten Elements das geformte Element durch Abkühlen eines Bereichs abschreckgehärtet wird, sodass es der Oberflächenschichtabschnitt ist unter der Kontaktoberfläche bei einer Abkühlgeschwindigkeit von mindestens 20°C/Sek im Durchschnitt in einem Temperaturbereich von einer Abschrecktemperatur auf 600°C und mindestens 30°C/Sek im Durschnitt in einem Temperaturbereich von einer Abschrecktemperatur auf 400°C.

## Revendications

1. Partie de machine constituée d'acier, contenant au moins 0,60 % en masse et au plus 1,50 % en masse de carbone, au moins 0,15 % en masse et au plus 2,50 % en masse de silicium, au moins 0,30 % en masse et au plus 1,50 % en masse de manganèse, et au moins 0,20 % en masse et au plus 2,00 % en masse de chrome, le reste consistant en impuretés, une quantité moyenne d'austénite résiduelle en tout représentant au plus 20 % en volume, **caractérisé en ce qu'**une concentration d'azote dans une portion de couche de surface sous une surface de contact qui doit être en contact avec une autre partie représente au moins 0,3 % en masse, dans lequel une portion de couche de surface indique une région depuis une surface jusqu'à une profondeur de 20 µm.

2. Partie de machine selon la revendication 1, l'acier contenant en outre au moins soit au plus 0,5 % en masse de nickel et au plus 0,2 % en masse de molybdène, le reste consistant en impuretés.

3. Partie de machine selon la revendication 1, dans laquelle, dans ladite portion de couche de surface sous ladite surface de contact, cinq carbonitrures ou plus ayant un diamètre d'au plus 0,5 µm sont présents pour 100 µm² dans une section perpendiculaire à ladite surface de contact.

4. Partie de machine selon la revendication 1, dans lequel la quantité d'austénite résiduelle dans une région ayant une profondeur de 50 µm depuis ladite surface de contact représente au moins 20 % en volume.

5. Partie de machine selon la revendication 1, représentant une partie constituant un palier.

6. Partie de machine selon la revendication 5, représentant une bague intérieure d'un roulement à rouleaux et ayant une concentration d'azote d'au plus 0,05 % en masse dans une surface radialement intérieure.

7. Roulement à rouleaux, comprenant :
un élément de chemin de roulement ; et
une pluralité d'éléments de roulement agencés en contact avec ledit élément de chemin de roulement,
au moins soit ledit élément de chemin de roulement et lesdits éléments de roulement représentant la partie de machine telle que définie selon la revendication 5.

8. Palier à rouleaux coniques, comprenant :
une bague extérieure ayant une surface de chemin de roulement de bague extérieure conique ;
une bague intérieure ayant une surface de chemin de roulement de bague intérieure conique et étant dotée d'une surface de bride plus grande sur un côté de diamètre plus grand de ladite surface de chemin de roulement de bague intérieure et d'une surface de bride plus petite sur un côté de diamètre plus petit ;
une pluralité de rouleaux coniques agencés de manière roulable entre ladite surface de chemin de roulement de bague extérieure et ladite surface de chemin de roulement de bague intérieure ; et
une cage retenant lesdits rouleaux coniques selon un espacement prédéterminé dans une direction circonférentielle,
pendant l'utilisation du palier, une face d'extrémité plus grande de chacun desdits rouleaux coniques étant guidée en contact avec ladite surface de bride plus grande de ladite bague intérieure,
R/R_{BASE} ayant une valeur comprise dans une plage de 0,75 à 0,87, où R indique un rayon de courbure de ladite face d'extrémité plus grande de chacun desdits rouleaux coniques et R_{BASE} indique une distance depuis un vertex d'une surface conique comportant une surface circonférentielle extérieure de chacun desdits rouleaux coniques jusqu'à ladite surface de bride plus grande de ladite bague intérieure,
au moins un quelconque de ladite bague extérieure, de ladite bague intérieure et desdits rouleaux coniques étant la partie de machine telle que définie selon la revendication 1.

9. Palier à rouleaux coniques, comprenant :
une bague extérieure ayant une surface de chemin de roulement de bague extérieure conique ;
une bague intérieure ayant une surface de chemin de roulement de bague intérieure conique et étant dotée d'une surface de bride plus grande sur un côté de diamètre plus grand de ladite surface de chemin de roulement de bague intérieure et d'une surface de bride plus petite sur un côté de diamètre plus petit ;
une pluralité de rouleaux coniques agencés de manière roulable entre ladite surface de chemin de roulement de bague extérieure et ladite surface de chemin de roulement de bague intérieure ; et
une cage retenant lesdits rouleaux coniques selon un espacement prédéterminé dans une direction circonférentielle,
pendant l'utilisation du palier, une face d'extrémité plus grande de chacun desdits rouleaux coniques étant guidée en contact avec ladite surface de bride plus grande de ladite bague intérieure,
R/ R_{BASE} ayant une valeur comprise dans une plage de 0,75 à 0,87, où R indique un rayon de courbure de ladite face d'extrémité plus grande de chacun desdits rouleaux coniques et R_{BASE} indique une distance depuis un vertex d'une surface conique comportant une surface circonférentielle extérieure de chacun desdits rouleaux coniques jusqu'à ladite surface de bride plus grande de ladite bague intérieure,
au moins un quelconque de ladite bague extérieure, de ladite bague intérieure et desdits rouleaux coniques étant la partie de machine telle que définie selon la revendication 2.

10. Palier à rouleaux coniques selon la revendication 8, dans lequel ladite surface de bride plus grande de ladite bague intérieure a une rugosité de surface Ra comprise dans une plage de 0,05 pm à 0,20 µm.

11. Palier à rouleaux coniques selon la revendication 8, dans lequel un espace δ entre ladite surface de bride plus petite de ladite bague intérieure et une face d'extrémité plus petite de chacun desdits rouleaux coniques, laissé lorsque ladite face d'extrémité plus grande de chacun desdits rouleaux coniques vient en contact avec ladite surface de bride plus grande de ladite bague intérieure, est commandé pour ne pas être supérieur à 0,4 mm.

12. Palier à rouleaux coniques selon la revendication 8, dans lequel ladite surface de bride plus grande de ladite bague intérieure comporte :
une surface de base qui doit venir en contact avec ladite face d'extrémité plus grande de chacun desdits rouleaux coniques, et
un flanc se connectant de manière lisse à un côté extérieur de ladite surface de base et étant incurvé dans une direction espacée de ladite face d'extrémité plus grande de chacun desdits rouleaux coniques.

13. Palier à rouleaux coniques selon la revendication 12, dans lequel ledit flanc a une forme en coupe transversale comportant une région arquée.

14. Palier à rouleaux coniques selon la revendication 12, dans lequel
un évidement ayant une forme plane circulaire est prévu au niveau d'une portion centrale de ladite face d'extrémité plus grande de chacun desdits rouleaux coniques, et
une extrémité circonférentielle extérieure dudit évidement est positionnée dans une région limite entre ladite surface de base et ledit flanc de ladite bague intérieure.

15. Palier à rouleaux coniques selon la revendication 12, dans lequel la limite entre ladite surface de base et ledit flanc est positionnée au niveau d'un bord extérieur d'une ellipse de contact maximum produite par le contact entre ladite face d'extrémité plus grande de chacun desdits rouleaux coniques et ladite surface de bride plus grande sous une charge axiale maximum autorisée du palier.

16. Palier à rouleaux coniques selon la revendication 8, dans lequel, dans ladite portion de couche de surface sous ladite surface de contact, cinq carbonitrures ou plus ayant un diamètre d'au plus 0,5 µm sont présents pour 100 µm² dans une section perpendiculaire à ladite surface de contact.

17. Procédé de fabrication d'une partie de machine, comprenant les étapes consistant à :
produire un élément formé en moulant de l'acier contenant au moins 0,60 % en masse et au plus 1,50 % en masse de carbone, au moins 0,15 % en masse et au plus 2,50 % en masse de silicium, au moins 0,30 % en masse et au plus 1,50 % en masse de manganèse, et au moins 0,20 % en masse et au plus 2,00 % en masse de chrome, le reste consistant en impuretés ;
carbonitrurer ledit élément moulé ;
durcir par trempe ledit élément moulé ayant été carbonitruré ;
recuire ledit élément moulé ayant été durci par trempe ; et
usiner ledit élément moulé ayant été recuit, formant ainsi une surface de contact qui est une surface qui doit être en contact avec une autre partie,
dans l'étape consistant à recuire l'élément moulé, ledit élément moulé est recuit de telle sorte qu'une quantité moyenne d'austénite résiduelle dudit élément moulé en tout représente au plus 20 % en volume,
les étapes consistant à carbonitrurer ledit élément moulé, durcir par trempe ledit élément moulé, recuire ledit élément moulé, et mouler ladite surface de contact étant réalisées de telle sorte que, dans ladite portion de couche de surface sous ladite surface de contact, cinq carbonitrures ou plus ayant un diamètre d'au plus 0,5 µm sont présents pour 100 µm² dans une section perpendiculaire à ladite surface de contact,
**caractérisé en ce que**, dans l'étape consistant à carbonitrurer ledit élément moulé, ledit élément moulé est carbonitruré de telle sorte qu'une concentration d'azote dans une portion de couche de surface sous ladite surface de contact représente au moins 0,3 % en masse dans l'étape consistant à mouler ladite surface de contact, dans lequel une portion de couche de surface indique une région depuis une surface jusqu'à une profondeur de 20 µm.

18. Procédé de fabrication d'une partie de machine selon la revendication 17, l'acier moulé contenant en outre au moins soit au plus 0,5 % en masse de nickel, soit au plus 0,2 % en masse de molybdène, le reste consistant en impuretés.

19. Procédé de fabrication d'une partie de machine selon la revendication 17, dans lequel, dans l'étape consistant à durcir par trempe ledit élément moulé, ledit élément moulé est durci par trempe en refroidissant une région qui doit être la portion de couche de surface sous ladite surface de contact, à une vitesse de refroidissement d'au moins 20 °C/sec en moyenne dans une plage de température allant de la température de trempe à 600 °C et au moins 30 °C/sec en moyenne dans une plage de température allant de la température de trempe à 400 °C.
